# EUROPÄISCHE PATENTSCHRIFT

(11) **EP 4 157 760 B1**
(45) Veröffentlichungstag und Bekanntmachung des Hinweises auf die Patenterteilung: **02.10.2024**
(21) Anmeldenummer: 21732169.4
(22) Anmeldetag: 27.05.2021
(51) Int. Cl.: B65G 21/06, B65G 21/20, B65G 13/11, F16B 21/04

(54) **VERBINDUNGSVORRICHTUNG ZUR MONTAGE EINER HALTERUNG FÜR KOMPONENTEN EINER FÖRDERVORRICHTUNG UND FÖRDERVORRICHTUNG ZUM TRANSPORT VON STÜCKGUT**
CONNECTING DEVICE FOR ASSEMBLING A HOLDER FOR COMPONENTS OF A CONVEYOR DEVICE, AND CONVEYOR DEVICE FOR TRANSPORTING UNIT LOADS
DISPOSITIF DE RACCORD POUR L'ASSEMBLAGE D'UN SUPPORT DE COMPOSANTS DE DISPOSITIF DE TRANSPORT, ET DISPOSITIF DE TRANSPORT SERVANT AU TRANSPORT DE CHARGES UNITAIRES

(30) Priorität: 28.05.2020 AT 504662020
(43) Veröffentlichungstag der Anmeldung: 05.04.2023
(60) Teilanmeldung: 24197261.1
(73) Patentinhaber: TGW Mechanics GmbH, 4600 Wels (AT)
(72) Erfinder: LINDORFER, Stefan, 4122 Arnreit (AT); SCHÖNBAUER, Manuel, 4715 Taufkirchen an der Trattnach (AT); LEEB, Clemens, 4611 Buchkirchen (AT)
(74) Vertreter: Burger, Hannes
(86) Internationale Anmeldenummer: PCT/AT2021/060182
(87) Internationale Veröffentlichungsnummer: WO 2021/237262

(56) Entgegenhaltungen:
- EP-A1- 2 103 555
- EP-A2- 1 661 754
- US-B1- 6 588 578

## Beschreibung

Die Erfindung betrifft eine Anbindungsanordnung einer Verbindungsvorrichtung zur Montage von einer Halterung für Komponenten einer Fördervorrichtung zum Transport von Stückgut, eine Verbindungsvorrichtung, eine Seitenführungshalterung, eine Sensorhalterung und eine Abdeckungshalterung gemäß der Ansprüche 1, 10, 11, 14 und 17.

Darüber hinaus betrifft die Erfindung jeweils eine Fördervorrichtung gemäß der Ansprüche 21 und 24.

Die EP 1 661 754 A2 offenbart eine Anbindungsanordnung gemäß dem Oberbegriff des Anspruchs 1. Die Anbindungsanordnung umfasst einen Basiskörper, welcher ein Verbindungselement und eine Verriegelungsvorrichtung aufweist. Das Verbindungselement und die Verriegelungsvorrichtung können hierbei mit Ausnehmungen in einem Montageschenkel zusammenwirken, um die Anbindungsanordnung zu befestigen.

Die EP 2 103 555 A1 und US 6,588,578 B1 offenbaren eine Fördervorrichtung mit Rahmenprofilen, mehreren Förderelementen und Seitenführungsprofilen.

Aus dem Stand der Technik sind auch Halterungen bekannt, mit welchen Seitenführungsprofile an Rahmenprofilen einer Fördervorrichtung befestigt werden können, um einen Förderbereich seitlich zu begrenzen und im Förderbereich gefördertes Stückgut zumindest temporär zu führen. Derartige Halterungen müssen robust ausgebildet sein, um Belastungen während eines Betriebes der Fördervorrichtung standzuhalten und gegebenenfalls eine Sicherheit bei einer Fehlbenutzung zu gewährleisten. So soll die Halterung insbesondere einem Gewicht eines Arbeiters standhalten, wenn dieser auf ein montiertes Seitenführungsprofil tritt, um beispielsweise Überkopfarbeiten oberhalb des Förderbereiches durchzuführen. Zur Befestigung der Seitenführungsprofile an den jeweiligen Rahmenprofilen sind die Halterungen üblicherweise mit dem Rahmenprofil verschraubt, um eine feste und robuste Verbindung mit dem Rahmenprofil herzustellen.

Eine derartige Halterung ist aus der DE 101 18 566 A1 bekannt, welche seitlich am Rahmenprofil montierbar ist. Hierfür weist die Halterung eine Verbindungsschraube auf, welche mit einer Befestigungsnut seitlich am Rahmenprofil zusammenwirkt. Das Seitenführungsprofil ist in der Regel über eine Vielzahl von derartigen Halterungen am Rahmenprofil befestigt, wobei das Seitenführungsprofil mittels Spannkopf an der Halterung gehalten wird.

Nachteilig ist hierbei, dass zusätzliche Mittel wie Schrauben erforderlich sind, um die Halterungen am Rahmenprofil zu fixieren, was eine Montage der Halterungen aufwändig gestaltet. Darüber hinaus wird die Halterung seitlich am Rahmenprofil fixiert, wodurch eine nachfolgende Montage einer Abdeckung für das Rahmenprofil erschwert ist, da jeweils Teilstücke der Abdeckung zwischen zwei Halterungen angebracht werden müssen. Dies führt dazu, dass entlang einer Seitenfläche des Rahmenprofils eine Vielzahl von Stoßfugen, insbesondere jeweils zwischen einem Teilstück der Abdeckung und einer am Rahmenprofil befestigten Halterung, vorhanden sind. Ferner führt dies zu einem erheblichen technischen Mehraufwand bei der Montage der Fördervorrichtung, zumal jedes Teilstück der Abdeckung exakt eingepasst, zugeschnitten und separat montiert werden muss. Andererseits bringen seitlich vorstehende Schrauben und Schraubenköpfe ein erhöhtes Verletzungsrisiko, beispielsweise beim Vorbeigehen an der Fördervorrichtung, mit sich.

Darüber hinaus sind aus dem Stand der Technik Halterungen bekannt, mit welchen Sensoren am Rahmenprofil der Fördervorrichtung befestigt werden können. Eine Halterung, welche mittels einer einachsigen Verbindungsvorrichtung am Rahmenprofil befestigbar ist, ist in der EP 0 995 980 A2 beschrieben. Hierbei weist die Halterung einen Verbindungskopf auf, welcher in eine mit diesem zusammenwirkende Ausnehmung am Rahmenprofil eingreift und durch eine Rotation fixiert wird.

Nachteilig ist hierbei, dass die am Rahmenprofil angeordnete Ausnehmung einen speziellen und exakt zum Verriegelungskopf korrespondierenden Querschnitt aufweisen muss, wodurch eine Produktion des Rahmenprofils erschwert ist. Die Ausnehmungen sind an ausgewählten Stellen angeordnet, weshalb eine Sensorposition bereits bei der Produktion des Rahmenprofils berücksichtigt werden muss. Darüber hinaus ist eine einachsige Verbindungsvorrichtung nicht zur Befestigung von Seitenführungsprofilen geeignet.

Aufgabe der Erfindung ist es daher, eine Anbindungsanordnung der eingangs genannten Art anzugeben, welche universell einsetzbar ist und einen reduzierten Arbeitsaufwand bei der Montage einer Fördervorrichtung ermöglicht.

Weiter ist es Aufgabe der Erfindung eine Verbindungsvorrichtung, eine Seitenführungshalterung, eine Sensorhalterung und eine Abdeckungshalterun mit einer derartigen Anbindungsanordnung anzugeben.

Darüber hinaus ist es Aufgabe der Erfindung eine Fördervorrichtung der eingangs genannten Art anzugeben, bei welcher ein Montageaufwand reduziert werden kann.

Die Aufgabe der Erfindung wird durch die Merkmale des Anspruchs 1 gelöst.

Ein mit der Erfindung erzielter Vorteil ist vor allem darin zu sehen, dass die Anbindungsanordnung in einfacher Art und Weise, insbesondere ohne Schrauben, mit einem Montageschenkel verbindbar und universell einsetzbar ist, beispielsweise zur Montage von Halterungen für verschiedene Komponenten der Fördervorrichtung, wie Seitenführungsprofile, Sensoren, Lichtreflektoren oder Abdeckungen, insbesondere Unterseitenabdeckungen. Vorteilhaft ist es, dass die Montage, beispielsweise der Halterung am Montageschenkel, ohne Werkzeug erfolgen kann. Hierbei kann das Verbindungselement der Anbindungsanordnung von oben in die erste Ausnehmung der Ausnehmungen gesteckt und zur Fixierung in die Montageposition gedreht werden, in welcher die Verriegelungsvorrichtung in die zweite Ausnehmung der Ausnehmungen eingreift. Somit wird mit der Anbindungsanordnung eine einfache und verriegelbare Steck-Dreh-Verbindung realisiert.

Bevorzugt ist hierbei vorgesehen, dass die erste Ausnehmung und die zweite Ausnehmung bzw. die Ausnehmungen identisch ausgebildet sind.

"Von oben" fixeren, befestigen oder dergleichen bedeutet im Sinne der Erfindung im Wesentlichen von oberhalb der Förderebene kommend.

Der Montageschenkel kann an einem Rahmenprofil einer Fördervorrichtung und/oder an einer Abdeckung angeordnet sein. Die Längsrichtung des Montageschenkels entspricht hierbei bevorzugt einer Längsrichtung des Rahmenprofils und/oder der Fördervorrichtung. Im Wesentlichen erstreckt sich die Längsrichtung des Montageschenkels, des Rahmenprofils und/oder der Fördervorrichtung in einer Förderrichtung des Stückguts. In gekrümmten Förderabschnitten der Fördervorrichtung kann die Längsrichtung des Montageschenkels, des Rahmenprofils und/oder der Fördervorrichtung selbstverständlich ebenso gekrümmt sein. Alternativ verläuft die Längsrichtung des Montageschenkels entlang einer Breitseite oder einer Längsseite der Abdeckung.

Vorzugsweise ist vorgesehen, dass das Verbindungselement zapfenförmig ausgebildet ist. Darüber hinaus kann vorgesehen sein, dass die Verriegelungsvorrichtung dazu ausgebildet ist, selbsttätig in die zweite Ausnehmung der Ausnehmungen einzugreifen. Alternativ kann die Verriegelungsvorrichtung so ausgebildet sein, dass diese manuell mit der zweiten Ausnehmung der Ausnehmungen in Eingriff gebracht werden kann.

Der Basiskörper bildet eine robuste Basis, welche gegebenenfalls mit der Halterung verbunden oder einstückig mit dieser ausgebildet ist.

Zur Montage von Seitenführungsprofilen oder Sensoren kann beispielsweise vorgesehen sein, dass der Montageschenkel an einem Rahmenprofil der Fördervorrichtung angeordnet ist, sodass eine entsprechende Halterung mittels der Anbindungsanordnung ergonomisch vorteilhaft von oben mit dem Rahmenprofil verbunden werden kann. Darüber hinaus wird ein Arbeits- und Zeitaufwand bei der Montage der Fördervorrichtung wesentlich reduziert, zumal kein Anschrauben der Anbindungsanordnung am Rahmenprofil erforderlich ist und bei Fördervorrichtungen in der Regel eine Vielzahl von Halterungen fixiert werden müssen.

Da keine seitliche Befestigung der Halterung, beispielsweise der Seitenführungshalterung oder der Sensorhalterung, am Rahmenprofil erfolgt, ist es auch möglich, eine einstückige Seitenabdeckung des Rahmenprofils, insbesondere eine Kunststoffabdeckung, am Rahmenprofil anzubringen, ohne dass die Seitenabdeckung in Teilstücke unterteilt bzw. gestückelt werden muss. Dadurch ist die Montage der Fördervorrichtung zusätzlich vereinfacht. Darüber hinaus wird mit der einstückigen seitlichen Abdeckung bzw. Seitenabdeckung eine Anzahl an Stoßfugen entlang einer Seitenfläche des Rahmenprofils und/oder entlang einer Seitenfläche einer Vielzahl von Rahmenprofilen einer Fördervorrichtung wesentlich reduziert, sodass eine Reinigung der Fördervorrichtung vereinfacht wird.

Zum Herstellen einer Verbindung zwischen der Anbindungsanordnung und dem Montageschenkel wird die Anbindungsanordnung zunächst in die Anbindungsposition gebracht, in welcher das Verbindungselement in die erste Ausnehmung der Ausnehmungen gesteckt wird. Dadurch wird die vom Verbindungselement definierte Drehachse positioniert und ausgerichtet. Die Anbindungsanordnung wird dann um die Drehachse rotiert bzw. geschwenkt, wodurch die Anbindungsanordnung aus der Anbindungsposition in die Montageposition gebracht wird. In der Montageposition wird die Verriegelungsvorrichtung mit der zweiten Ausnehmung der Ausnehmungen in Eingriff gebracht. Somit ist die Anbindungsanordnung gegen ein unbeabsichtigtes Zurückrotieren bzw. Zurückschwenken in die Anbindungsposition gesichert.

Zum Lösen der Verbindung zwischen der Anbindungsanordnung und dem Montageschenkel wird die Verriegelungsvorrichtung aus der zweiten Ausnehmung der Ausnehmungen herausbewegt. Die Anbindungsanordnung kann nun aus der Montageposition in die Anbindungsposition gedreht werden, in welcher das Verbindungselement aus der ersten Ausnehmung der Ausnehmungen herausbewegt und beispielsweise die Halterung vom Rahmenprofil entfernt werden kann.

Zweckmäßigerweise weist der Basiskörper
- eine Deckenwandung,
- eine erste Seitenwandung und
- eine zweite Seitenwandung auf,
wobei die erste Seitenwandung und die zweite Seitenwandung einander gegenüberliegend angeordnet sind und sich von der Bodenwandung zumindest zur Deckenwandung erstrecken, und wobei eine Oberseite der Bodenwandung zur Deckenwandung gerichtet ist und eine Unterseite der Bodenwandung die Montagefläche bereitstellt. Dadurch weist der Basiskörper eine hohe Stabilität auf.

Bevorzugt ist der Basiskörper als Hohlkörper ausgebildet. Somit kann Material gespart und ein Gewicht der Anbindungsanordnung reduziert werden. Darüber hinaus kann der Basiskörper einen Innenraum und gegebenenfalls ein Gehäuse bereitstellen. Die Deckenwandung und die Bodenwandung können parallel zueinander verlaufend ausgerichtet sein. Von der Oberseite der Deckenwandung vorragend bzw. an diese anschließend kann die Halterung angeordnet sein. Hierfür kann die Halterung an die Oberseite der Deckenwandung angeformt sein. Ferner kann vorgesehen sein, dass die Unterseite der Bodenwandung einen rückspringenden Abschnitt aufweist, in welchem das Verbindungselement positioniert ist.

Es ist günstig, wenn der Basiskörper eine Vielzahl von Stützwandungen aufweist, welche zwischen der ersten Seitenwandung und der zweiten Seitenwandung angeordnet sind und sich von der Bodenwandung zur Deckenwandung erstrecken. Die Stützwandungen können parallel zueinander und/oder parallel zu der ersten Seitenwandung und/oder der zweiten Seitenwandung ausgerichtet sein. Eine erste Stützwandung der Stützwandungen ist vorzugsweise mit dem Verbindungselement in einer gedachten orthogonal zur Bodenwandung verlaufenden Linie positioniert.

Darüber hinaus kann eine Versteifungsrippe vorgesehen sein, welche parallel zu den Stützwandungen ausgerichtet und an die Deckenwandung in Richtung zur Bodenwandung vorragend angeformt ist. Ferner kann eine Vielzahl von Versteifungsrippen zusätzlich zu den Stützwandungen oder alternativ zu den Stützwandungen vorgesehen sein.

Die Stützwandungen und/oder die Versteifungsrippe erhöhen eine Biegefestigkeit der Deckenwandung, wodurch eine erhöhte Robustheit und Stabilität der Anbindungsanordnung gewährleistet ist. Zusätzlich zur Biegefestigkeit der Deckenwandung wird durch die Stützwandungen auch eine Biegefestigkeit der Bodenwandung erhöht.

Mit Vorteil weist der Basiskörper eine Rückwandung auf, welche sich von der Bodenwandung zumindest zur Deckenwandung und von der ersten Seitenwandung zur zweiten Seitenwandung erstreckt. Dadurch kann der Basiskörper einseitig geöffnet, insbesondere an einer Rückseite geschlossen und an einer Vorderseite geöffnet, ausgebildet sein. Die Rückwandung kann gekrümmt ausgebildet sein. Vorzugsweise erstreckt sich die Rückwandung von der Bodenwandung bis über die Deckenwandung hinaus, um eine Montageaufnahme der Halterung auszubilden.

Falls der Basiskörper als Hohlkörper ausgebildet ist, begrenzen die Bodenwandung, die Deckenwandung, die gegenüberliegenden Seitenwandungen sowie die Rückwandung den Innenraum des Hohlkörpers. Zweckmäßigerweise sind die Stützwandungen und/oder der Stützvorsprung im Innenraum des Hohlkörpers angeordnet.

In einer bevorzugten Ausführungsform weist der Basiskörper fünf Wandungen, nämlich die Bodenwandung, die Deckenwandung, die gegenüberliegenden Seitenwandungen sowie die Rückwandung auf, sodass der Hohlkörper einseitig geöffnet ist. Somit kann der Basiskörper, insbesondere samt Stützwandungen, in einem einfachen Spritzgussverfahren hergestellt werden.

Bevorzugt ist der Basiskörper aus einem Kunststoff ausgebildet. Der Basiskörper kann im Spritzgussverfahren oder im 3D-Druck, vorzugsweise einstückig, hergestellt werden. Dadurch lässt sich der Basiskörper besonders günstig und einfach herstellen. Darüber hinaus weist der Basiskörper ein geringes Gewicht auf.

Zweckmäßigerweise ist vorgesehen, dass das Verbindungselement einen von der Montagefläche vorragenden Zapfen mit einem hammerförmigen Kopf an einem von der Montagefläche vorragenden Ende umfasst, wobei der hammerförmige Kopf in der Anbindungsposition der Anbindungsanordnung durch die erste Ausnehmung des Montageschenkels hindurchführbar ist und in der Montageposition der Anbindungsanordnung einen Randbereich der ersten Ausnehmung des Montageschenkels hintergreift.

Dadurch wird das Verbindungselement gegen ein herausziehen aus der ersten Ausnehmung der Ausnehmungen gesichert und die Anbindungsanordnung orthogonal zum Montageschenkel am Montageschenkel im Wesentlichen durch einen Formschluss fixiert. Hierbei kann ein geringfügiges Spiel zwischen dem Montageschenkel und dem hammerförmigen Kopf vorhanden sein, um eine Schwenkbewegung zwischen der Montageposition und der Anbindungsposition zu begünstigen. Vorzugsweise ist das Verbindungselement drehfest an der Bodenwandung, insbesondere an der Unterseite der Bodenwandung, angeordnet.

Vorteilhaft ist es, dass das Verbindungselement einen Versteifungseinsatz umfasst.

Dadurch wird eine erhöhte Stabilität und Robustheit der Anbindungsanordnung, insbesondere des Verbindungselementes, erreicht. Wird die Anbindungsanordnung beispielsweise zur Montage einer Seitenführungshalterung der Fördervorrichtung eingesetzt, so hält die Anbindungsanordnung während des Betriebes der Fördervorrichtung nicht nur einer Belastung durch schwere Stückgüter, welche seitlich an das Seitenführungsprofil stoßen und entlang gleiten können, sondern auch einer übermäßigen Belastung stand, wie diese gegebenenfalls bei einer Fehlbenutzung auftritt. Eine Fehlbenutzung ist beispielsweise gegeben, wenn ein Montagearbeiter auf das Seitenführungsprofil steigt und die Seitenführungshalterungen ein Gewicht des Montagearbeiters auf das Rahmenprofil übertragen müssen. Der Versteifungseinsatz kann innerhalb des Verbindungselementes angeordnet und/oder vom Verbindungselement zumindest teilweise umgeben sein, beispielsweise indem bei der Herstellung der Anbindungsanordnung mittels Spritzgussverfahren der Versteifungseinsatz umgossen wird. Mit Vorteil umfasst der Kopf des Verbindungselementes den Versteifungseinsatz.

Um eine besonders hohe Robustheit zu erreichen, kann der Versteifungseinsatz aus einem metallischen Werkstoff, insbesondere aus Stahl oder Aluminium, ausgebildet sein.

Zweckmäßigerweise weist das Verbindungselement eine Vertiefung auf, in welcher der Versteifungseinsatz angeordnet und mit dem Verbindungselement verbunden ist. Dadurch wird einerseits das Herstellungsverfahren vereinfacht. Andererseits kann die Robustheit des Verbindungselementes individuell an eine jeweilige Anforderung angepasst werden, indem unterschiedliche Versteifungseinsätze in die Vertiefung aufgenommen sind.

Es kann weiter vorteilhaft sein, wenn die Vertiefung am vorragenden Ende des Verbindungselementes, insbesondere am Kopf des Verbindungselementes, angeordnet ist. Die Versteifungseinsätze können mit dem Verbindungselement verklebt oder verschraubt sein.

Besonders bevorzugt weist das Verbindungselement ein zylinderförmiges Einschraubloch, beispielsweise eine Bohrung, entlang einer Längsachse des Verbindungselementes auf. Das Einschraubloch kann ein Innengewinde für eine Schraube zur Fixierung des Versteifungselementes aufweisen. Alternativ kann das Einschraubloch mit einer glatten Innenfläche bzw. ohne Gewinde ausgebildet sein. Hierbei kann das Verbindungselement beispielsweise mit einer gewindeschneidenden Schraube, welche in das Einschraubloch geschraubt ist, fixiert sein. Vorzugsweise reicht das Einschraubloch durch das Verbindungselement bis in die erste Stützwandung der Stützwandungen durch.

Erfindungsgemäß weist die Verriegelungsvorrichtung ein Verriegelungselement auf, welches senkrecht zur Montagefläche, insbesondere aus dem Basiskörper heraus, bewegbar ist, um in die zweite Ausnehmung der Ausnehmungen einzugreifen.

Hierbei kann vorgesehen sein, dass die Bodenwandung, vorzugsweise an der Unterseite, eine Vertiefung aufweist, wobei das Verriegelungselement zumindest teilweise, insbesondere vollständig, in die Vertiefung und/oder zumindest teilweise aus der Vertiefung heraus bewegbar ist. Die Vertiefung kann beispielsweise durch die Bodenwandung hindurchreichend, vorzugsweise als Durchgangsloch, ausgebildet sein, sodass das Verriegelungselement zumindest teilweise, insbesondere vollständig, in den Basiskörper und/oder zumindest teilweise aus dem Basiskörper heraus bewegbar ist. Vorzugsweise ist das Verriegelungselement so in die Vertiefung bzw. in den Basiskörper bewegbar, dass das Verriegelungselement bündig mit der Bodenwandung, insbesondere mit der Unterseite der Bodenwandung, abschließt. Somit kann das Verriegelungselement zumindest teilweise innerhalb des Basiskörpers bzw. innerhalb der Vertiefung in der Bodenwandung angeordnet sein, um die Anbindungsanordnung aus der Anbindungsposition in die Montageposition oder umgekehrt zu bewegen. Ebenso kann das Verriegelungselement zumindest teilweise aus dem Basiskörper bzw. aus der Vertiefung der Bodenwandung vorragen, um die Anbindungsanordnung in der Montageposition zu arretieren. Es hat sich bewährt, dass das Verriegelungselement als Zapfen ausgebildet ist.

Bevorzugt ist vorgesehen, dass das Verriegelungselement um eine Verriegelungsdrehachse zwischen einer ersten Position und einer zweiten Position drehbar am Basiskörper gelagert ist und einen hammerförmigen Kopf aufweist, welcher in der ersten Position des Verriegelungselementes durch die zweite Ausnehmung der Ausnehmungen hindurchführbar ist und in der zweiten Position des Verriegelungselementes einen Randbereich der zweiten Ausnehmung der Ausnehmungen hintergreift.

Dadurch kann die Verriegelungsvorrichtung gegen ein herausbewegen aus der zweiten Ausnehmung der Ausnehmungen gesichert werden. Somit kann die Anbindungsanordnung entlang von zwei Achsen, nämlich durch das Verbindungselement und die Verriegelungsvorrichtung, senkrecht zum Montageschenkel, insbesondere analog zum Verbindungselement, fixiert sein. Dies ist vor allem dann vorteilhaft, wenn die Anbindungsanordnung von unten mit einem Montageschenkel verbunden wird, wie dies beispielsweise bei einer Befestigung einer Abdeckung, insbesondere einer Unterseitenabdeckung, einer Fördervorrichtung, der Fall ist. Es ist nicht zwingend erforderlich, dass die erste und zweite Position fixierbar sind. Ferner kann vorgesehen sein, dass das Verriegelungselement frei drehbar, vorzugsweise um 360° drehbar, gelagert ist.

Erfindungsgemäß ist das Verriegelungselement senkrecht zur Montagefläche bewegbar, um in die zweite Ausnehmung der Ausnehmungen einzugreifen.

Bevorzugt ist das Verriegelungselement senkrecht zur Montagefläche und entgegen einer Wirkung einer Federkraft bewegbar, wobei das Verriegelungselement in der Montageposition selbsttätig unter Ausnutzung der Federkraft in die zweite Ausnehmung der Ausnehmungen eingreifen kann.

Günstig ist es, wenn die Verriegelungsvorrichtung ein Federelement umfasst, wobei das Verriegelungselement am Federelement angeordnet ist. Somit ist das Verriegelungselement entgegen der Wirkung der Federkraft bewegbar, um das Federelement vorzuspannen, sodass das Verriegelungselement unter Entspannung des Federelementes selbsttätig in die zweite Ausnehmung der Ausnehmungen eingreifen kann. Hierbei kann vorgesehen sein, dass das Verriegelungselement ein Rastelement bereitstellt. Gegebenenfalls kann das Verriegelungselement oder das Rastelement drehbar am Federelement gelagert sein.

Das Federelement kann beispielsweise als Federarm ausgebildet sein, an welchem das Verriegelungselement bzw. das Rastelement angeordnet ist. Vorzugsweise ist das Rastelement als Rastnase ausgebildet, welche an den Federarm angeformt ist.

Alternativ dazu kann das Federelement in der Vertiefung der Bodenwandung angeordnet sein. Die Vertiefung ist bevorzugt zylinderförmig ausgebildet. Hierbei kann das Federelement an einem ersten Ende mit der Bodenwandung verbunden sein. An einem zweiten Ende des Federelementes kann das Verriegelungselement positioniert sein, sodass das Verriegelungselement zumindest teilweise aus der Vertiefung ragt, wenn das Federelement entspannt ist. Das Verriegelungselement wirkt so mit dem Federelement zusammen, dass das Federelement gespannt bzw. komprimiert wird, wenn das Verriegelungselement zumindest teilweise in die Vertiefung gedrückt wird.

Beispielsweise kann das Rastelement bzw. das Verriegelungselement zapfenförmig, keilförmig oder kugelförmig bzw. als Kugel ausgebildet sein. Bevorzugt ist das Federelement als Spiralfeder ausgebildet.

Zweckmäßigerweise weist die Bodenwandung zwei von einem ersten Rand der Bodenwandung in Richtung eines dem ersten Rand gegenüberliegenden zweiten Randes der Bodenwandung erstreckende und voneinander beabstandete Schlitze auf, sodass die Bodenwandung zwischen den Schlitzen biegbar ist, um das Federelement bereitzustellen. Ein Abschnitt der Bodenwandung zwischen den Schlitzen ist somit relativ zu einem übrigen Abschnitt der Bodenwandung und im Wesentlichen orthogonal zur Montagefläche biegbar und bildet das Federelement bzw. den Federarm aus. Dies ermöglicht eine Bewegung des Verriegelungs- bzw. Rastelementes, welches am Federelement angeordnet ist, sodass dieses über den Montageschenkel führbar ist und in die zweite Ausnehmung der Ausnehmungen einrasten kann. Ferner ist es günstig, wenn hierbei der Basiskörper zumindest teilweise als Hohlkörper ausgebildet ist.

Die weitere Aufgabe wird erfindungsgemäß und unter Ausnutzung der zuvor genannten Vorteile dadurch gelöst, dass bei einer Verbindungsvorrichtung der eingangs genannten Art die Anbindungsanordnung nach einem der zuvor genannten Aspekte ausgebildet ist und der Montageschenkel eine Vielzahl von in Längsrichtung des Montageschenkels voneinander beabstandeten Ausnehmungen aufweist, wobei eine erste Ausnehmung der Ausnehmungen mit dem Verbindungselement der Anbindungsanordnung und eine zweite Ausnehmung der Ausnehmungen mit dem Verriegelungselement der Anbindungsanordnung zusammenwirken können. Vorzugsweise ist die Anbindungsanordnung hierbei an der Halterung angeordnet.

Somit umfasst die Verbindungsvorrichtung eine erste Komponente, nämlich die Anbindungsanordnung, und eine zweite Komponente, nämlich den Montageschenkel, wobei die erste und zweite Komponente zusammenwirken, um eine, insbesondere ineinander steckbare und durch eine Drehbewegung verriegelbare Verbindung herzustellen.

Hierbei ist insbesondere vorgesehen, dass die Vielzahl von in Längsrichtung des Montageschenkels voneinander beabstandeten Ausnehmungen identisch zueinander ausgebildet sind. Dadurch ist ein Herstellungsprozess des Montageschenkels bzw. des Rahmenprofils vereinfacht.

Ein mit der Erfindung erzielter Vorteil ist vor allem darin zu sehen, dass eine Verbindung mittels der Verbindungsvorrichtung in einfacher Art und Weise wie zuvor beschrieben hergestellt und wieder gelöst werden kann, bevorzugt ohne Verwendung von zusätzlichem Werkzeug.

Es ist von Vorteil, wenn der Montageschenkel an einem Rahmenprofil der Fördervorrichtung angeordnet ist.

Somit kann die Anbindungsanordnung in einfacher Art und Weise mit dem Rahmenprofil verbunden werden, um beispielsweise eine Halterung für ein Seitenführungsprofil, eine sogenannte Seitenführungshalterung, zu montieren. Die Anbindungsanordnung ist hierbei an der Halterung angeordnet bzw. von dieser umfasst. Zur Montage des Seitenführungsprofils an der Seitenführungshalterung kann ein alternativer Verbindungsmechanismus, insbesondere eine formschlüssige Aufnahme des Seitenführungsprofils am Seitenführungshalter, eine Klemm- und/oder Schraubverbindung oder dergleichen, vorgesehen sein.

Zweckmäßig ist es, wenn der Montageschenkel an einer Abdeckung angeordnet ist.

Dadurch kann die Anbindungsanordnung in einfacher Art und Weise mit der Abdeckung verbunden werden, um beispielsweise die Abdeckung mit einer Halterung hierfür, einer sogenannten Abdeckungshalterung, zu verbinden. Die Anbindungsanordnung ist hierbei an der Halterung angeordnet bzw. von dieser umfasst. Zur Befestigung der Halterung am Rahmenprofil kann ein alternativer Verbindungsmechanismus vorgesehen sein.

Unter Ausnutzung der zuvor genannten Vorteile wird die weitere Aufgabe dadurch gelöst, dass bei einer Seitenführungshalterung der eingangs genannten Art die Anbindungsanordnung nach einem der zuvor beschriebenen Aspekte ausgebildet ist.

Im Sinne der Erfindung ist eine Seitenführungshalterung umfassend eine Anbindungsanordnung gleichwertig mit einer Anbindungsanordnung umfassend eine Seitenführungshalterung. Diese Formulierungen sind demnach als analog zu betrachten.

Ein mit der Erfindung erzielter Vorteil ist wie zuvor dargelegt insbesondere darin zu sehen, dass die Seitenführungshalterung ohne zusätzliche Montagemittel leicht zugänglich, nämlich von oben, mit dem Montageschenkel verbindbar ist, wodurch ein Seitenführungsprofil in einfacher Art und Weise am Rahmenprofil fixierbar ist.

Das Seitenprofil weist üblicherweise eine Führungsseite und eine Montageseite auf, wobei die Führungsseite zu einem Förderbereich und die Montageseite von einem Förderbereich weggerichtet ist. Die Montageaufnahme ist zur formschlüssigen Aufnahme des Seitenführungsprofils, insbesondere der Montageseite des Seitenführungsprofils, ausgebildet. Hierfür können die Montageaufnahme der Seitenführungshalterung und die Montageseite des Seitenführungsprofils mit einer korrespondierenden Kontur ausgebildet sein.

Vorzugsweise ist die Montageaufnahme so ausgebildet, dass das Seitenführungsprofil in einem Vertikalabstand zum Rahmenprofil anordenbar ist. Der Vertikalabstand ist orthogonal zum Montageschenkel ausgerichtet und erstreckt sich zwischen dem Montageschenkel des Rahmenprofils und einer zum Montageschenkel parallelen (gedachten) ersten Tangentialebene, welche eine Unterkante des Seitenführungsprofils definiert. Der Vertikalabstand zwischen dem Rahmenprofil und dem Seitenführungsprofil entspricht zumindest einer Höhe des Basiskörpers der Anbindungsanordnung bzw. in anderen Worten einem Abstand zwischen der Unterseite der Bodenwandung und der Oberseite der Deckenwandung. Dadurch ist ein optischer Zugang zum Förderbereich gewährleistet, welcher beispielsweise eine Erfassung bzw. Detektion von im Förderbereich transportiertem Stückgut mittels optischer Sensoren ermöglicht. Darüber hinaus kann eine verbesserte Seitenführung des Stückgutes bei vergleichsweiser niedriger Seitenführungsprofilhöhe erreicht werden. Der Materialeinsatz für das Seitenführungsprofil kann gering gehalten werden.

Mit Vorteil ist die Montageaufnahme einstückig mit dem Basiskörper der Anbindungsanordnung ausgebildet. Dadurch sind die Handhabung der Seitenführungshalterung vereinfacht und die Robustheit erhöht, da die Seitenführungshalterung nicht zusätzlich mit der Anbindungsanordnung, gegebenenfalls über einen weiteren Verbindungsmechanismus, verbunden werden muss. Darüber hinaus wird eine einfache Herstellung ermöglicht.

Bevorzugt weist die Montageaufnahme eine Öffnung zur Aufnahme des Verbindungsmittels auf.

Das Verbindungsmittel kann somit durch die Öffnung geführt und das Seitenführungsprofil mit dem Verbindungsmittel an der Seitenführungshalterung befestigt werden. Hierfür ist die Öffnung vorzugsweise als Durchgangsbohrung ausgebildet. Mit Vorteil umfasst das Verbindungsmittel eine Schraube, welche mit einem Schaft, insbesondere von einer Außenseite der Montageaufnahme, durch die Öffnung geführt und mit dem Seitenführungsprofil verbunden wird. Alternativ kann die Schraube von einer Innenseite durch die Öffnung geführt und an der Außenseite mit einer Mutter fixiert werden. Hierbei kann der Schraubenkopf mit dem Seitenführungsprofil verbunden sein.

Bevorzugt ist vorgesehen, dass das Verbindungsmittel eine Hammerkopfschraube umfasst, welche mit einer Befestigungsnut des Seitenführungsprofils zusammenwirken kann, um das Seitenführungsprofil an der Seitenführungshalterung zu befestigen. Ein hammerförmiger Schraubenkopf der Hammerkopfschraube kann zur Befestigung in der Befestigungsnut des Seitenführungsprofils aufgenommen sein, wobei ein Schaft der Hammerkopfschaube durch die Öffnung der Montageaufnahme geführt und mit einer Mutter an der Montageaufnahme fixiert ist. Die Befestigungsnut ist hierfür zweckmäßigerweise an der Montageseite des Seitenführungsprofils angeordnet. Vorzugsweise weist die Befestigungsnut an einem offenen Ende beidseitig Befestigungslaschen auf, sodass die Befestigungsnut zum Umgreifen bzw. Hintergreifen eines hammerförmigen Kopfes der Hammerkopfschraube ausgebildet ist. Durch ein Festziehen der Mutter können die Befestigungslaschen an die Montageaufnahme gepresst werden, um das Seitenführungsprofil zu fixieren.

Unter Ausnutzung der für die Anbindungsanordnung bzw. die Verbindungsvorrichtung genannten Vorteile wird die weitere Aufgabe dadurch gelöst, dass bei einer Sensorhalterung der eingangs genannten Art die Sensorhalterung eine Anbindungsanordnung nach einem der zuvor genannten Aspekte aufweist.

Im Sinne der Erfindung ist eine Sensorhalterung umfassend eine Anbindungsanordnung gleichwertig mit einer Anbindungsanordnung umfassend eine Sensorhalterung. Diese Formulierungen sind demnach als analog zu betrachten.

Zweckmäßigerweise weist das Außengehäuse eine Bodenwandung und eine Deckenwandung auf. Ferner können eine erste Seitenwandung und eine zweite Seitenwandung vorgesehen sein, welche einander gegenüberliegend angeordnet sind und sich jeweils von der Bodenwandung zur Deckenwandung erstrecken. Überdies kann eine Rückwandung vorhanden sein, welche sich von der ersten Seitenwandung zur zweiten Seitenwandung und von der Bodenwandung zur Deckenwandung erstreckt. Hierbei kann vorgesehen sein, dass eine Oberseite der Bodenwandung zur Deckenwandung gerichtet ist und eine Unterseite der Bodenwandung die Montagefläche bereitstellt. Die Deckenwandung, die Bodenwandung, die Seitenwandungen und/oder die Rückwandung sind vorzugsweise vollflächig ausgebildet.

Es ist günstig, wenn das Außengehäuse so ausgebildet ist, dass der abgestrahlte Lichtstrahl aus dem Außengehäuse und der reflektierte Lichtstrahl in das Außengehäuse führbar sind. Hierfür kann das Außengehäuse einseitig geöffnet ausgebildet sein. Dies kann verwirklicht sein, indem das Außengehäuse an einer nach der Montage am Rahmenprofil der Fördervorrichtung zum Förderbereich gewandten Seite keine Wandung aufweist. Alternativ dazu kann das Außengehäuse eine vierte Seitenwandung aufweisen, welche zumindest eine Öffnung aufweist, sodass der Sensor, insbesondere die Lichtquelle und der Lichtempfänger, optisch zugänglich ist.

In einer alternativen Ausführung kann das Außengehäuse als Gestell bzw. die Seitenwandungen, die Bodenwandung und/oder die Deckenwandung gitterförmig ausgebildet sein.

Das Innengehäuse ist innerhalb des Außengehäuses angeordnet und dient der Aufnahme des Sensors. Dadurch ist die Sensorhalterung flexibel einsetzbar, da unterschiedliche Sensoren im Innengehäuse aufgenommen werden können. So kann beispielsweise das Innengehäuse an einen beliebigen Sensor angepasst werden, ohne dass das Außengehäuse, eine Verbindung zwischen dem Innengehäuse und dem Außengehäuse und/oder die Anbindungsanordnung adaptiert werden müssen.

Um beispielsweise Stückgut, welches mit der Fördervorrichtung transportiert wird, zu erfassen bzw. zu detektieren, ist es günstig, wenn die Sensorhalterung einen Sensor umfasst. Der Sensor ist vorzugsweise als optischer Sensor, umfassend eine Lichtquelle und einen Lichtempfänger, ausgebildet. Hierbei kann der Sensor beispielsweise zum Detektieren des Stückguts oder zum Erfassen von Identifikationsmarken, wie einem Strichcode oder QR-Code, ausgebildet sein.

Mit Vorteil ist der Sensor so angeordnet, dass ein von der Lichtquelle abgestrahlter Lichtstrahl den Förderbereich durchquert. Hierfür kann vorgesehen sein, dass die Sensorhalterung so ausgebildet bzw. am Rahmenprofil befestigbar ist, dass der Sensor zwischen dem Montageschenkel und der zuvor beschriebenen ersten Tangentialebene angeordnet ist. Eine Höhe des Außengehäuses entspricht hierfür vorzugsweise der Höhe des Basiskörpers der Anbindungsanordnung der Seitenführungshalterung bzw. einem orthogonalen Abstand zwischen der entsprechenden Bodenwandung und der Deckenwandung.

Bevorzugt ist vorgesehen, dass der Basiskörper der Anbindungsanordnung das Außengehäuse bildet. Somit kann in einfacher Art und Weise eine Sensorhalterung hergestellt werden, welche die Anbindungsanordnung umfasst bzw. eine Anbindungsanordnung, welche die Sensorhalterung umfasst.

Die Höhe des Basiskörpers der Sensorhalterung, also ein orthogonaler Abstand zwischen der Bodenwandung und der Deckenwandung, ist vorzugsweise geringer als oder gleich groß wie der zuvor beschriebene Vertikalabstand zwischen dem Rahmenprofil und dem Seitenführungsprofil. Somit kann ein zusätzlicher Vorteil darin gesehen werden, dass die Sensorhalterung am Rahmenprofil der Fördervorrichtung befestigt werden kann, selbst wenn die Seitenführungsprofile bereits montiert sind. Ebenso kann die Sensorhalterung vom Rahmenprofil gelöst werden, ohne dass die Seitenführungsprofile zuvor entfernt werden. Überdies wird auch ein einfaches Austauschen eines beispielsweise defekten Sensors ermöglicht, was eine Wartung der Fördervorrichtung vereinfacht.

Zweckmäßigerweise ist das Innengehäuse schwenkbar am Außengehäuse gelagert, wobei eine Neigung des Innengehäuses mittels einer Verstellvorrichtung einstellbar ist. Dadurch wird eine Einstellbarkeit eines vom abgestrahlten Lichtstrahl und der Förderebene eingeschlossenen Winkels ermöglicht. Zur schwenkbaren Lagerung kann das Außengehäuse in der ersten Seitenwandung und der zweiten Seitenwandung jeweils eine Bolzenaufnahme, beispielsweise eine kreisrunde oder elliptische Öffnung und/oder Vertiefung, insbesondere eine Bohrung, aufweisen. Das Innengehäuse kann zwei zu den Bolzenaufnahmen korrespondierende zylinderförmige Fortsätze bzw. Bolzen aufweisen, welche beidseitig in einer Linie zueinander am Innengehäuse angeordnet bzw. an dieses angeformt sind. Diese Bolzen sind so ausgebildet, dass diese in die korrespondierende Bolzenaufnahme eingreifen können. Somit definieren die Bolzen eine Schwenkachse des Innengehäuses, welche im Wesentlichen parallel zur Bodenwandung und zur Deckenwandung des Außengehäuses ausgerichtet ist. Vorzugsweise ist das Innengehäuse lösbar im Außengehäuse befestigt. Hierfür kann jeweils eine Montagekerbe an einer Innenseite der ersten Seitenwand und der zweiten Seitenwand vorgesehen sein, welche von einem Rand der Seitenwand zur Bolzenaufnahme führt, um die Bolzen von der Kerbe in die Bolzenaufnahme zu führen.

Die Verstellvorrichtung umfasst vorzugsweise eine Stellschraube und eine mit dieser zusammenwirkende Verzahnung, welche am Innengehäuse angeordnet, insbesondere an das Innengehäuse angeformt, ist. Bevorzugt ist die Stellschraube als Gewindestift ausgebildet. Vorteilhaft ist es, wenn die Verzahnung um die Schwenkachse des Innengehäuses gekrümmt ausgebildet ist, sodass während des Schwenkens des Innengehäuses ein kontinuierliches Eingreifen eines Gewindes der Stellschraube in die Verzahnung des Innengehäuses gewährleistet ist. Um die Sensorhalterung mit einer geringen Höhe auszubilden, kann vorgesehen sein, dass die Stellschraube orthogonal zur Bodenwandung und zur Deckenwandung des Außengehäuses ausgerichtet und die Verzahnung an einer Rückwand des Innengehäuses angeordnet ist. Vorzugsweise weisen die Bodenwandung und/oder die Deckenwandung eine Betätigungsöffnung auf, durch welche die Stellschraube beispielsweise mittels Schraubenzieher betätigt werden kann.

Alternativ dazu kann die Stellschraube parallel zur Bodenwandung und zur Deckenwandung des Außengehäuses ausgerichtet und die Verzahnung an einer Bodenwandung oder Deckenwandung des Innengehäuses angeordnet sein. Dadurch kann die Sensorhalterung mit einer geringen Tiefe ausgebildet sein. Hierbei kann die Rückwandung des Außengehäuses die Betätigungsöffnung aufweisen, durch welche die Stellschraube beispielsweise mittels Schraubenzieher betätigt werden kann.

Mit Vorteil weist das Verbindungselement der Anbindungsanordnung einen Kabelkanal auf, sodass ein Kabel des Sensors durch den Kabelkanal aus dem Außengehäuse führbar ist. Dadurch kann eine Stromversorgung des Sensors, insbesondere über eine externe Stromquelle, oder ein Datenaustausch zwischen dem Sensor und einer Datenverarbeitungseinrichtung ermöglicht werden. Das Kabel des Sensors, beispielsweise ein Stromkabel und/oder ein Datenkabel, kann durch den Kabelkanal durch das Verbindungselement und somit durch die erste Ausnehmung der Ausnehmungen geführt werden. Hierbei kann das Kabel des Sensors ein einziges Kabel aufweisen oder als Kabelstrang mit mehreren Kabeln ausgebildet sein. Bevorzugt ist der Kabelkanal zylinderförmig ausgebildet und erstreckt sich parallel zur Längsachse des Verbindungselementes, vorzugsweise vom hammerförmigen Kopf des Verbindungselementes bis durch die Bodenwandung in das Außengehäuse. Eine Seitenwand des zylinderförmigen Kanals kann parallel zur Längsachse des Kanals über eine Gesamtlänge des Kanals geöffnet sein bzw. einen Spalt aufweisen, sodass der Kabelkanal einen im Wesentlichen C-förmigen Querschnitt aufweist. Das Kabel kann somit durch den Spalt seitlich in den Kabelkanal gedrückt werden.

Unter Ausnutzung der zuvor genannten Vorteile wird die weitere Aufgabe dadurch gelöst, dass bei einer Abdeckungshalterung der eingangs genannten Art die Anbindungsanordnung nach einem zuvor beschriebenen Aspekte ausgebildet ist.

Mit einer derartigen Abdeckungshalterung kann eine Abdeckung der Fördervorrichtung, insbesondere eine Unterseitenabdeckung bzw. ein Fördervorrichtungsunterschutz, am Rahmenprofil der Fördervorrichtung befestigt werden. Hierfür wird die Abdeckung mit einer Vielzahl von Abdeckungshalterungen einerseits am ersten Rahmenprofil der Fördervorrichtung und andererseits am zweiten Rahmenprofil der Fördervorrichtung befestigt.

Bevorzugt ist die Montageaufnahme einstückig mit dem Basiskörper der Anbindungsanordnung ausgebildet. Dadurch wird eine einfach zu handhabende Abdeckungshalterung bereitgestellt, welche zunächst mit der Abdeckung verbunden und anschließend mit wenigen Handgriffen am Rahmenprofil der Fördervorrichtung befestigt werden kann.

Zweckmäßigerweise ist die Montageaufnahme über eine Scharnierverbindung mit dem Basiskörper der Anbindungsanordnung verbunden, sodass die Montageaufnahme und der Basiskörper der Anbindungsanordnung relativ zueinander schwenkbar sind. Dadurch kann die Abdeckung schwenkbar am Rahmenprofil der Fördervorrichtung befestigt werden. Hierbei kann vorgesehen sein, dass die Abdeckung zunächst entlang einer ersten Kante der Abdeckung über eine Vielzahl von schwenkbaren Abdeckungshalterungen in einer ersten Position mit dem ersten Rahmenprofil der Fördervorrichtung verbunden und anschließend in eine zweite Position geschwenkt wird, in welcher die Abdeckung entlang einer zweiten Kante der Abdeckung über eine Vielzahl von schwenkbaren oder einstückigen Abdeckungshalterungen mit dem zweiten Rahmenprofil der Fördervorrichtung verbunden wird.

Mit Vorteil weist die Montageaufnahme eine Öffnung zur Aufnahme des Verbindungsmittels auf. Das Verbindungsmittel kann somit durch die Öffnung geführt und am Rahmenprofil befestigt werden. Die zuvor für die Verbindung zwischen der Seitenführungshalterung und dem Seitenführungsprofil sowie für das Verbindungsmittel der Seitenführungshalterung beschriebenen Aspekte sind analog auf eine Verbindung zwischen der Abdeckungsaufnahme und dem Rahmenprofil bzw. das Verbindungsmittel der Abdeckungsaufnahme zutreffend.

Ebenso ist besonders bevorzugt vorgesehen, dass das Verbindungsmittel eine Hammerkopfschraube umfasst, welche mit einer Befestigungsnut des Rahmenprofils zusammenwirken kann, um die Abdeckungshalterung am Rahmenprofil zu befestigen.

Unter Ausnützung der zuvor beschriebenen Vorteile ist bevorzugt vorgesehen, dass die Verriegelungsvorrichtung der Anbindungsanordnung ein Verriegelungselement aufweist, welches senkrecht zur Montagefläche bewegbar ist, um in die zweite Ausnehmung der Ausnehmungen einzugreifen, und/oder dass das Verriegelungselement um eine Verriegelungsdrehachse aus einer ersten Position in eine zweite Position reversibel drehbar am Basiskörper gelagert ist und einen hammerförmigen Kopf aufweist, welcher in der ersten Position des Verriegelungselementes durch die zweite Ausnehmung der Ausnehmungen hindurchführbar ist und in der zweiten Position des Verriegelungselementes einen Randbereich der zweiten Ausnehmung der Ausnehmungen hintergreift.

Die weitere Aufgabe wird unter Ausnutzung der zuvor genannten Vorteile dadurch gelöst, dass bei einer Fördervorrichtung der eingangs genannten Art Absatz zumindest eine Seitenführungshalterung der Seitenführungshalterungen eine Anbindungsanordnung nach einem der zuvor beschriebenen Aspekte aufweist und mit einem korrespondierenden Rahmenprofil der Rahmenprofile über eine Verbindungsvorrichtung nach einem der zuvor beschriebenen Aspekte verbunden ist.

Ein mit der Erfindung erzielter Vorteil ist insbesondere darin zu sehen, dass die Fördervorrichtung in einfacher Art und Weise errichtet werden kann, wobei die Seitenführungshalterungen mit dem Montageschenkel des Rahmenprofils verbunden werden können, ohne verschraubt zu werden.

Die Förderebene, auf welcher ein Stückgut transportiert werden kann, ist durch das zumindest eine Förderelement definiert. Beispielsweise kann die Fördervorrichtung als Gurtförderer ausgebildet sein, wobei ein umlaufender Fördergurt das Förderelement bereitstellt, wobei die Förderebene durch den Fördergurt definiert ist. Alternativ dazu kann die Fördervorrichtung als Rollenförderer ausgebildet sein, wobei eine Vielzahl von Förderelementen, insbesondere Förderrollen, vorgesehen sind, wobei die Förderebene durch die Förderelemente definiert ist.

Das erste Seitenführungsprofil und das zweite Seitenführungsprofil bilden bei einer derartigen Fördervorrichtung eine seitliche Begrenzung des Förderbereiches, in welchem Stückgut gefördert werden kann. Der Förderbereich ist nach unten durch die Förderebene begrenzt. Das Stückgut wird auf der Förderebene transportiert.

Zweckmäßigerweise ist die zumindest eine Seitenführungshalterung der Seitenführungshalterung nach einem der zuvor beschriebenen Aspekte ausgebildet. Darüber hinaus können zusätzliche alternative Seitenführungshalterungen verwendet werden.

Vorteilhaft ist es, wenn die Rahmenprofile jeweils einen orthogonal zur Förderebene ausgerichteten Profilschenkel umfassen, wobei der Profilschenkel eine der Förderebene zugewandte erste Seite und eine von der Förderebene abgewandte zweite Seite aufweist und wobei der Montageschenkel von der zweiten Seite vorragend am Profilschenkel angeordnet und parallel zur Förderebene ausgerichtet ist. Vorzugsweise ist der Montageschenkel in einer Ebene mit der Förderebene und/oder parallel zur Förderebene angeordnet und ausgerichtet. Das Rahmenprofil umfasst bevorzugt einen parallel zum Montageschenkel angeordneten weiteren Schenkel, welcher von der zweiten Seite vorragend am Profilschenkel angeordnet ist, sodass das Rahmenprofil im Wesentlichen einen C-förmigen Querschnitt aufweist. Ferner kann das Rahmenprofil eine abnehmbare Seitenabdeckung aufweisen, welche sich zwischen dem Montageschenkel und dem weiteren Schenkel erstreckt und beabstandet zum Profilschenkel positioniert ist, sodass ein Innenraum bereitgestellt wird, welcher durch den Profilschenkel, den Montageschenkel, den weiteren Schenkel sowie die Seitenabdeckung begrenzt ist. In diesem Innenraum können beispielsweise Kabel, insbesondere Strom oder Datenkabel, beispielsweise von einem Sensor, geführt sein. Besonders bevorzugt ist das Kabel eines Sensors durch den Kabelkanal einer Sensorhalterung durch die erste Ausnehmung der Ausnehmungen in den Innenraum des Rahmenprofils geführt.

Mit Vorteil weist der Profilschenkel eine Vielzahl von Montageöffnungen auf. An einer Montageöffnung der Montageöffnungen kann beispielsweise ein Förderelement oder eine Komponente, wie eine Anschlussbox für einen Aktuator und/oder einen Sensor, eine Datenverarbeitungseinrichtung, eine Stromversorgung für elektrische Bauteile, und dergleichen montiert sein. Das Förderelement, insbesondere die Förderrolle, kann über eine Rollenachse in einander gegenüberliegenden Montageöffnungen der Rahmenprofile gelagert sein. Alternativ oder zusätzlich dazu kann eine Montageöffnung der Montageöffnungen zum Durchführen von Kabeln dienen, sodass ein Kabel von der ersten Seite des Profilschenkels zur zweiten Seite des Profilschenkels, insbesondere in den Innenraum des Profilschenkels geführt werden kann.

Bevorzugt weisen die Seitenführungsprofile je eine Befestigungsnut zur Aufnahme eines Verbindungsmittels der Seitenführungshalterungen auf. Somit kann ein Seitenführungsprofil in einfacher Art und Weise an den Seitenführungshalterungen befestigt werden. Die Befestigungsnut kann hierbei wie zuvor in Bezug auf die Seitenführungshalterung beschrieben ausgebildet sein.

Um einen Transportvorgang zu überwachen, kann vorgesehen sein, dass zumindest ein Sensor mittels einer Sensorhalterung nach einem der zuvor genannten Aspekte an einem Rahmenprofil der Rahmenprofile befestigt ist. Vorzugsweise ist der Sensor mit einer Steuereinheit verbunden, welche abhängig von einem Sensorsignal den Antrieb eines Förderelementes ansteuert, beispielsweise eine Fördergeschwindigkeit des Förderelementes der Fördervorrichtung verändert, um ein Stückgut in einem Förderabschnitt auf der Förderbewegung anzuhalten oder mit veränderter Transportgeschwindigkeit zu transportieren. Zur Detektion eines Vorhandenseins von Stückgut in einem bestimmten Förderabschnitt, weist die Fördervorrichtung vorzugsweise eine Lichtschranke auf, welche den Sensor umfasst. Die Lichtschranke kann als Einweglichtschranke ausgebildet sein, welche eine Lichtquelle bzw. einen Lichtsender und einen Lichtempfänger umfasst, die an gegenüberliegenden Seiten des Förderbereiches positioniert sind. Alternativ kann die Lichtschranke als Reflexionslichtschranke ausgebildet sein, wobei der Sensor eine Lichtquelle und einen Lichtempfänger umfasst, welche in einem gemeinsamen Gehäuse angeordnet sind und wobei die Lichtschranke einen Lichtreflektor umfasst, welcher an einer dem Sensor gegenüberliegenden Seite des Förderbereiches positioniert ist.

Die weitere Aufgabe wird mit einer Fördervorrichtung der eingangs genannten Art gelöst, wobei, zumindest eine Abdeckungshalterung der Abdeckungshalterungen eine Anbindungsanordnung nach einem der zuvor beschriebenen Aspekte aufweist und über eine Verbindungsvorrichtung nach einem der zuvor beschriebenen Aspekte, bei welcher die Montageschenkel an der Abdeckung angeordnet sind, mit der Abdeckung verbindbar ist, wobei der erste Randabschnitt der Abdeckung und der zweite Randabschnitt der Abdeckung jeweils einen Montageschenkel ausbilden.

Vorzugsweise ist die Abdeckung als Unterseitenabdeckung ausgebildet und an einer Unterseite der Fördervorrichtung montiert. Die Unterseitenabdeckung dient als Schutz vor einem Eingriff von unten in die Fördervorrichtung. Darüber hinaus kann die Abdeckung mit einer Matte ausgekleidet sein, um einen Schall bzw. Lärm der Fördervorrichtung zu dämmen.

Mit einer Verbindungsvorrichtung bzw. eine Halterung mit einer erfindungsgemäßen Anbindungsanordnung kann die Abdeckung in einfacher Art und Weise mit dem Rahmenprofil der Fördervorrichtung verbunden werden. Hierbei kann insbesondere vorgesehen sein, dass die Abdeckungshalterung zunächst über die Anbindungsanordnung mit der Abdeckung und anschließend über das Verbindungsmittel, vorzugsweise die Hammerkopfschraube, mit dem Rahmenprofil verbunden wird.

Unter Ausnutzung der zuvor genannten Vorteile ist die zumindest eine Abdeckungshalterung nach einem der zuvor beschriebenen Aspekte ausgebildet.

Zweckmäßigerweise weisen die Rahmenprofile jeweils einen parallel zur Förderebene ausgerichteten Abdeckungsschenkel auf, welcher eine Befestigungsnut aufweist. Der Abdeckungsschenkel kann im Wesentlichen dem zuvor beschriebenen weiteren Schenkel entsprechen und parallel zum Montageschenkel des Rahmenprofils verlaufen. Die Befestigungsnut ist analog zur Befestigungsnut des Seitenführungsprofils ausgebildet, sodass das Verbindungsmittel, insbesondere die Hammerkopfschraube, der Abdeckungshalterung in der Befestigungsnut aufgenommen werden kann.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
- Fig. 1: einen Abschnitt einer Fördervorrichtung in einer ersten Ausführung;
- Fig. 2: eine Seitenführungshalterung mit einer Anbindungsanordnung;
- Fig. 3a: die Anbindungsanordnung in einer Anbindungsposition in einer Ansicht von unten;
- Fig. 3b: die Anbindungsanordnung in einer Montageposition in einer Ansicht von unten;
- Fig. 4a: die Seitenführungshalterung in der Anbindungsposition in einer Ansicht von oben;
- Fig. 4b: die Seitenführungshalterung in der Montageposition in einer Ansicht von oben;
- Fig. 5: einen Querschnitt durch die Fördervorrichtung und die Seitenführungshalterung gemäß V in Fig. 1;
- Fig. 6: eine Seitenansicht der Fördervorrichtung;
- Fig. 7: eine Sensorhalterung mit der Anbindungsanordnung;
- Fig. 8: einen Querschnitt durch die Sensorhalterung;
- Fig. 9: einen Querschnitt durch die Fördervorrichtung und die Sensorhalterung gemäß IX in Fig. 1;
- Fig. 10a: eine erste Ausführung einer Abdeckungshalterung mit der Anbindungsanordnung;
- Fig. 10b: die Abdeckungshalterung nach Fig. 10a in einer weiteren Darstellung;
- Fig. 10c: eine zweite Ausführungsform der Abdeckungshalterung;
- Fig. 11: die Abdeckungshalterung an einer Abdeckung;
- Fig. 12a: einen Querschnitt durch die befestigte Abdeckungshalterung in einer ersten Querschnittsebene;
- Fig. 12b: einen Querschnitt durch die befestigte Abdeckungshalterung in einer zweiten Querschnittsebene;
- Fig. 13a: einen Abschnitt einer Fördervorrichtung in einer zweiten Ausführung, mit einer ersten Ausführung einer Sensorhalterung und einer zweiten Ausführung einer Sensorhalterung;
- Fig. 13b: die Fördervorrichtung nach Fig. 13a mit einer dritten Ausführung einer Sensorhalterung;
- Fig. 14: einen Querschnitt durch ein Seitenführungsprofil und schematisch angedeutet das Rahmenprofil der Fördervorrichtung nach Fig. 13a und Fig. 13b.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

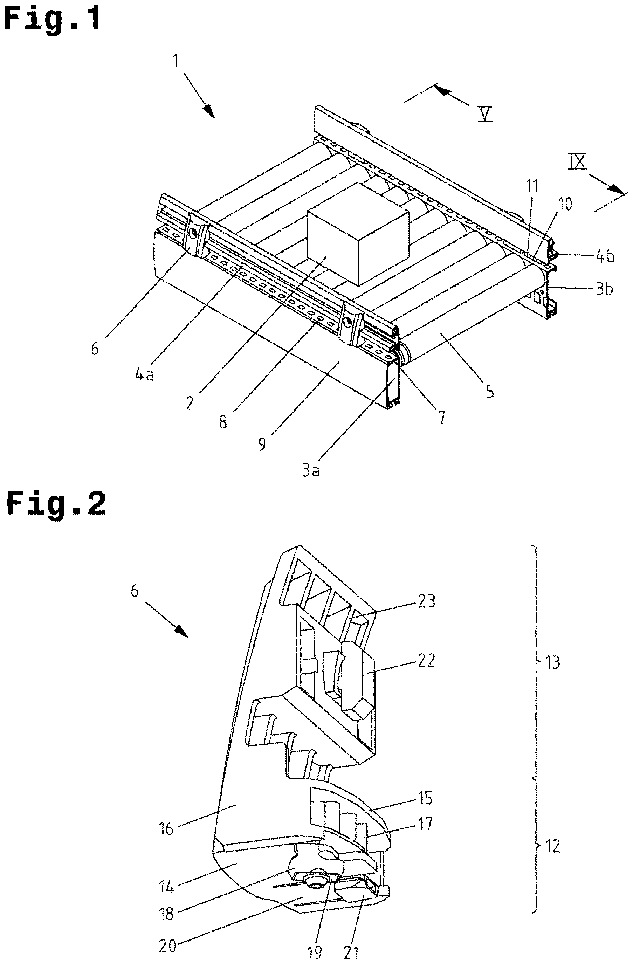

Fig. 1 zeigt eine perspektivische Darstellung eines Abschnitts einer Fördervorrichtung 1 zum Transport von Stückgut 2, umfassend zwei Rahmenprofile 3a, 3b, zwei Seitenführungsprofile 4a, 4b und eine Vielzahl von Förderelementen 5.

Im gezeigten Beispiel verlaufen ein erstes Rahmenprofil 3a und ein zweites Rahmenprofil 3b mit gegenseitigem Abstand parallel zueinander in einer Förderrichtung des Stückguts 2. Die Förderelemente 5 sind zwischen dem ersten Rahmenprofil 3a und dem zweiten Rahmenprofil 3b angeordnet und definieren eine Förderebene.

Hierbei sind die Förderelemente 5 als Förderrollen ausgebildet. Alternativ dazu kann beispielsweise vorgesehen sein, dass die Förderelemente 5 als Fördergurte ausgebildet sind oder ein Förderelement 5 vorgesehen ist, welches als Fördergurt ausgebildet ist. Auch kann ein Fördergurt um Förderrollen geführt werden, sodass das Förderelement 5 durch den Fördergurt gebildet ist.

Das Stückgut 2 wird auf der Förderebene FE bzw. in einem Förderbereich transportiert, welcher seitlich durch die Seitenführungsprofile 4a, 4b bzw. durch einander zugewandte Innen- oder Führungsseiten der Seitenführungsprofile 4a, 4b und nach unten durch die Förderebene FE begrenzt ist.

Um den Förderbereich seitlich zu begrenzen, verlaufen ein erstes Seitenführungsprofil 4a und ein zweites Seitenführungsprofil 4b ebenfalls mit gegenseitigem Abstand parallel zueinander und in Förderrichtung des Stückguts 2. Die Seitenführungsprofile 4a, 4b sind jeweils über eine Vielzahl von Seitenführungshalterungen 6 an einem korrespondierenden Rahmenprofil 3a, 3b befestigt.

Darüber hinaus weisen die Seitenführungsprofile 4a, 4b jeweils eine Führungsseite und eine Montageseite auf. Bei der gezeigten Fördervorrichtung 1 sind die Seitenführungsprofile 4a, 4b so angeordnet, dass deren Führungsseiten einander bzw. dem Förderbereich zugewandt sind. Die Montageseite des ersten Seitenführungsprofils 4a und die Montageseite des zweiten Seitenführungsprofils 4b sind voneinander bzw. vom Förderbereich abgewandt. Überdies sind die Seitenführungsprofile 4a, 4b jeweils an der Montageseite mit den Seitenführungshalterungen 6 verbunden.

Ferner weisen die Rahmenprofile 3a, 3b jeweils einen Montageschenkel 7 auf, welcher eine Vielzahl von zueinander beabstandeten Ausnehmungen 8 umfasst. Zur Befestigung der Seitenführungshalterungen 6 am Rahmenprofil 3a, 3b sind diese jeweils so ausgebildet, dass die Seitenführungshalterungen 6 in die Ausnehmungen 8 im Montageschenkel 7 eingreifen können.

Die Rahmenprofile 3a, 3b weisen im Wesentlichen einen C-förmigen Querschnitt auf, wobei eine Seitenabdeckung 9 zum Verschließen bzw. Abdecken einer offenen Seite des C-förmigen Querschnittes. Somit wird ein durch das Rahmenprofil 3a, 3b und die Seitenabdeckung 9 begrenzter Innenraum des Rahmenprofils 3a, 3b bereitgestellt. In Fig. 1 ist das erste Rahmenprofil 3a mit der Seitenabdeckung 9 und das zweite Rahmenprofil 3b ohne Seitenabdeckung 9 dargestellt.

Zur Detektion des Stückguts 2 weist die Fördervorrichtung 1 einen Sensor 10 auf, welcher mittels einer Sensorhalterung 11 am zweiten Rahmenprofil 3b befestigt ist. Die Sensorhalterung 11 ist hierbei analog zur Seitenführungshalterung 6 montiert, sodass diese in die Ausnehmungen 8 im Montageschenkel 7 eingreifen kann.

In Fig. 2 ist eine perspektivische Darstellung einer Seitenführungshalterung 6 gezeigt, welche eine Anbindungsanordnung 12 und eine Montageaufnahme 13 umfasst. Die Anbindungsanordnung 12 ist an einer Unterseite der Seitenführungshalterung 6 angeordnet und bildet in Zusammenwirkung mit dem Montageschenkel 7, insbesondere mit zwei benachbarten Ausnehmungen 8, eine Verbindungsvorrichtung.

Hierbei ist vorgesehen, dass die Anbindungsanordnung 12 an einer Unterseite der Seitenführungshalterung 6 angeordnet ist und einen Basiskörper aufweist. Der Basiskörper umfasst eine Bodenwandung 14, eine Deckenwandung 15, eine Rückwandung sowie zwei Seitenwandungen 16. Eine erste Seitenwandung 16 und eine zweite Seitenwandung 16 sind an zwei gegenüberliegenden Enden der Bodenwandung 14 positioniert und erstrecken sich jeweils zwischen der Bodenwandung 14 und der Deckenwandung 15. Die Rückwandung erstreckt sich von der ersten Seitenwandung 16 zur zweiten Seitenwandung 16 sowie von der Bodenwandung 14 zur Deckenwandung 15. Überdies sind mehrere Stützwandungen 17 vorgesehen, welche sich parallel zu den Seitenwänden von der Bodenwandung 14 zur Deckenwandung 15 erstrecken.

An einer von der Deckenwandung 15 abgewandten Seite bzw. Unterseite der Bodenwandung 14 sind ein Verbindungselement 18 und eine Verriegelungsvorrichtung angeordnet. Das Verbindungselement 18 und die Verriegelungsvorrichtung wirken mit zwei benachbarten Ausnehmungen 8 im Montageschenkel 7 zusammen, um eine Verbindung herzustellen, sodass die Anbindungsanordnung 12 und der Montageschenkel 7 eine Verbindungsvorrichtung ausbilden.

Das Verbindungselement 18 umfasst einen Zapfen mit einem hammerförmigen Kopf an einem von der Bodenwandung 14 vorragenden Ende. Um den hammerförmigen Kopf zu bilden, ist das vorragende Ende mit Hinterschneidungen ausgebildet. Der Zapfen ist an die Bodenwandung 14 angeformt.

Darüber hinaus kann das Verbindungselement 18 ein Versteifungselement 19 umfassen, welches in einer Vertiefung am vorragenden Ende des Verbindungselementes 18 angeordnet ist. Das Versteifungselement 19 kann als Plättchen, insbesondere aus Stahl oder Aluminium, ausgebildet sein. Zur Fixierung kann das Versteifungselement 19 mit dem Verbindungselement 18 verschraubt werden.

Die Verriegelungsvorrichtung umfasst nach dieser Ausführung ein Federelement 20 und ein Verriegelungselement 21, welches am Federelement 20 angeordnet, vorzugsweise angeformt, ist. Das Federelement 20 kann als Federzunge ausgebildet sein. Somit bilden die Anbindungsanordnung 12 und der Montageschenkel 7 eine verriegelbare Verbindungsvorrichtung.

Im gezeigten Beispiel ist das Verriegelungselement 21 als Rastnase ausgebildet. Um das Federelement 20 zu bilden, weist die Bodenwandung 14 zwei von einem Rand der Bodenwandung 14 ausgehende Schlitze auf, sodass die Bodenwandung 14 zwischen diesen Schlitzen biegbar ist. Ein Abschnitt der Bodenwandung 14 zwischen den Schlitzen bildet somit das Federelement 20 aus. Hierbei verlaufen die Schlitze parallel oder um eine Symmetrieachse gespiegelt zueinander, sodass das Federelement 20 bzw. die Schlitze und gedachte Verbindungslinien zwischen Enden der Schlitze ein Rechteck oder ein gleichschenkeliges Trapez formen.

Es wird festgehalten, dass die in Fig. 2 dargestellte Anbindungsanordnung 12 an der Seitenführungshalterung 6, oder ebenso an einer Halterung für weitere Komponenten und Bauteile der Fördervorrichtung 1 angeordnet oder Teil einer solchen Halterung sein kann.

Die Montageaufnahme 13 ist an einer von der Bodenwandung 14 abgewandten Seite bzw. Oberseite der Deckenwandung 15 angeordnet. Darüber hinaus ist die Montageaufnahme 13 zur formschlüssigen Aufnahme des Seitenführungsprofils 4a, 4b ausgebildet. Hierfür weist die Montageaufnahme 13 eine zur Montageseite des Seitenführungsprofils 4a, 4b korrespondierende Kontur auf.

Um das Seitenführungsprofil 4a, 4b an der Montageaufnahme 13 bzw. an der Seitenführungshalterung 6 zu befestigen, weist die Montageaufnahme 13 ein Verbindungsmittel 22 auf, welches im gezeigten Beispiel eine Hammerkopfschraube umfasst.

Zur Erhöhung einer Formstabilität bzw. einer Biegesteifigkeit der Seitenführungshalterung 6 weist die dargestellte Montageaufnahme 13 mehrere Stützrippen 23 auf, welche im Wesentlichen orthogonal zur Deckenwandung 15 angeordnet sind. Die Stützrippen 23 sind nicht zwingend erforderlich. So kann die Montageaufnahme 13 beispielsweise auch als Vollkörper ausgebildet sein.

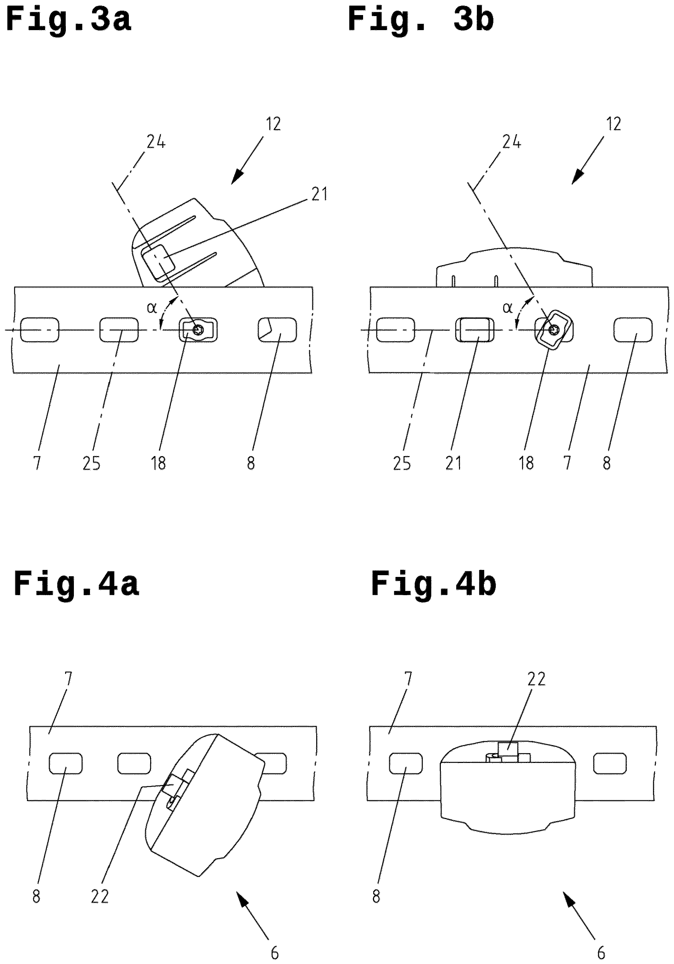

In Fig. 3a und Fig. 3b ist ein Vorgang zum Herstellen einer Verbindung zwischen der Anbindungsanordnung 12 und dem Montageschenkel 7 in einer Unteransicht gezeigt.

Die Ausnehmungen 8 des Montageschenkels 7 sind im gezeigten Beispiel als rechteckige Langausnehmungen bzw. Langlöcher mit abgerundeten Ecken ausgebildet. Eine Umfangsform der Ausnehmungen 8 entspricht im Wesentlichen einer Umfangsform des hammerförmigen Kopfes.

Zur Befestigung der Anbindungsanordnung 12 am Montageschenkel 7 wird die Anbindungsanordnung 12 zunächst in eine Anbindungsposition 24 gebracht. In der Anbindungsposition 24 befindet sich das Verbindungselement 18 in derselben Orientierung wie eine erste Ausnehmung 8 der Ausnehmungen 8. Somit kann der hammerförmige Kopf des Verbindungselementes 18 durch die erste Ausnehmung 8 hindurchgeführt werden. Dies ist in Fig. 3a gezeigt. Das nunmehr in der ersten Ausnehmung 8 eingeführte Verbindungselement 18 definiert eine Drehachse, um welche die Anbindungsanordnung 12 in eine Montageposition 25 gedreht bzw. geschwenkt werden kann. Die Drehachse ist senkrecht auf den Montageschenkel 7 ausgerichtet. Wie in Fig. 3a und Fig. 3b erkennbar ist, sind die Ausnehmungen 8, insbesondere die erste und zweite Ausnehmung 8 der Ausnehmungen 8 identisch ausgebildet.

Anschließend kann die Anbindungsanordnung 12 um einen bestimmten Drehwinkel α, insbesondere um zumindest 30°, vorzugsweise um einen Winkel in einem Bereich von 45° bis 90°, besonders bevorzugt um etwa 60°, um die Drehachse in die Montageposition 25 gedreht werden. Fig. 3b zeigt die Anbindungsanordnung 12 in der Montageposition 25.

In der Montageposition 25 hintergreift der hammerförmige Kopf des Verbindungselementes 18 den Montageschenkel 7 in einem Randbereich der ersten Ausnehmung 8. Das Verbindungselement 18 ist somit in der ersten Ausnehmung 8 orthogonal zum Montageschenkel 7 gegen ein herausbewegen aus dieser gesichert.

Während einer Drehung der Anbindungsanordnung 12 aus der Anbindungsposition 24 in die Montageposition 25 wirken das Verriegelungselement 21 und der Montageschenkel 7 so zusammen, dass das Verriegelungselement 21 und das Federelement 20 entgegen einer Wirkung einer Federkraft orthogonal zum Montageschenkel 7 und in Richtung der Deckenwandung 15 des Basiskörpers bzw. nach oben bewegt werden. Hierbei wird das Federelement 20 vorgespannt.

In der Montageposition 25 ist das Verriegelungselement 21 über einer zweiten Ausnehmung 8 der Ausnehmungen 8 bzw. in einer Linie mit dieser positioniert, sodass das Verriegelungselement 21 unter Entspannung des Federelementes 20 selbsttätig in die zweiten Ausnehmung 8 eingreift und einrastet. Dadurch wird die Anbindungsanordnung 12 gegen eine unbeabsichtigte Drehung um die Drehachse gesichert, wodurch die Verbindungsvorrichtung verriegelt ist.

In einer alternativen Ausführungsform kann vorgesehen sein, dass das Verriegelungselement 21 zunächst bündig oder rückspringend mit der Bodenwandung 14 angeordnet ist und in der Montageposition 25 nicht selbsttätig einrastet, sondern durch die zweite Ausnehmung 8 bewegt bzw. gedrückt werden muss.

Um die Verbindung zu lösen, wird das Verriegelungselement 21 zunächst aus der zweiten Ausnehmung 8 bewegt werden. Dann kann die Anbindungsanordnung 12 aus der Montageposition 25 in die Anbindungsposition 24 gedreht werden, in welcher das Verbindungselement 18 aus der ersten Ausnehmung 8 der Ausnehmungen 8 gezogen werden kann.

Eine Ausrichtung der Anbindungsposition 24 und der Montageposition 25, sowie der Drehwinkel α sind in Fig. 3a und Fig. 3b jeweils durch eine strichpunktierte Linie angedeutet.

In Fig. 4a und Fig. 4b ist der in Fig. 3a und Fig. 3b allgemein für die Anbindungsanordnung 12 gezeigte Vorgang zum Herstellen der Verbindung für die Seitenführungshalterung 6 in einer Draufsicht dargestellt. Hierbei wird die Seitenführungshalterung 6 aus der Anbindungsposition 24 (Fig. 4a) in die Montageposition 25 (Fig. 4b) bewegt. Die Seitenführungshalterung 6 ist wie in Fig. 2 dargestellt ausgebildet, wobei in Fig. 4a und Fig. 4b das Verbindungsmittel 22 der Seitenführungshalterung 6 ersichtlich ist.

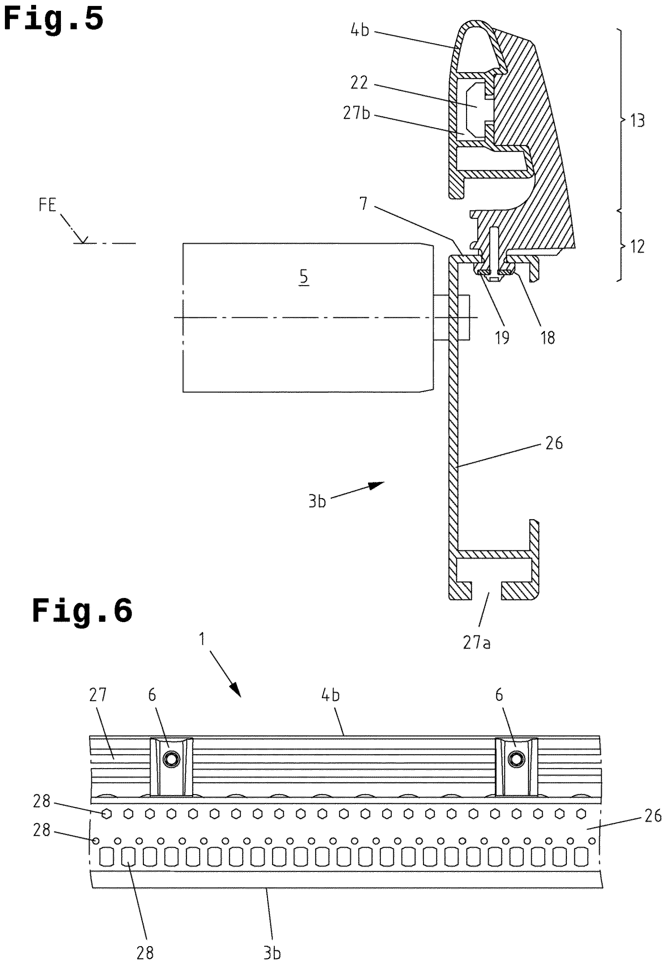

Fig. 5 zeigt einen Querschnitt durch die Fördervorrichtung 1 entlang der Linie V-V in Fig. 1. Hierbei ist das zweite Seitenführungsprofil 4b über Seitenführungshalterungen 6 am zweiten Rahmenprofil 3b befestigt. Das erste Seitenführungsprofil 4a kann selbstverständlich in analoger Weise über eine weitere Seitenführungshalterungen 6 am ersten Rahmenprofil 3a befestigt sein. Die Förderebene FE ist orthogonal zur Bildebene ausgerichtet.

Ferner umfasst das Rahmenprofil 3a, 3b einen Profilschenkel 26, an welchem die Förderelemente 5 mittels einer Rollenachse drehbar gelagert sind. Orthogonal vom Profilschenkel 26 vorragend und vom Förderbereich bzw. vom Förderelement 5 weggerichtet ist der Montageschenkel 7 des Rahmenprofils 3a, 3b angeordnet. Darüber hinaus umfasst das Rahmenprofil 3a, 3b einen weiteren Schenkel, welcher parallel zum Montageschenkel 7 an einem dem Montageschenkel 7 gegenüberliegenden Ende des Profilschenkels 26 angeordnet ist.

Der Montageschenkel 7, der Profilschenkel 26 und der weitere Schenkel bilden somit im Wesentlichen den C-förmigen Querschnitt des Rahmenprofils 3a, 3b. Ferner weist der weitere Schenkel eine nach unten gerichtete bzw. vom Montageschenkel 7 abgewandte Befestigungsnut 27a auf.

Die Seitenführungshalterung 6 kann durch die Anbindungsanordnung 12, insbesondere wie in Fig. 3a bis Fig. 4b gezeigt, am Montageschenkel 7 des Rahmenprofils 3a, 3b befestigt werden.

In Fig. 5 ist die Seitenführungshalterung 6 in einem Querschnitt durch das Verbindungselement 18 sowie eine erste Stützwandung 17, welche in einer Linie mit dem Verbindungselement 18 angeordnet ist, dargestellt, sodass eine Befestigungsschraube für das Versteifungselement 19 ersichtlich ist. Die Befestigungsschraube verläuft entlang einer Längsachse des Verbindungselementes 18. Hierbei ist vorgesehen, dass die Schraube durch das Verbindungselement 18 und durch die Bodenwandung 14 durch in die erste Stützwandung 17 ragt. Das Verbindungselement 18 und die erste Stützwandung 17 weisen hierfür eine zylinderförmige Bohrung mit einem Innengewinde für die Befestigungsschraube auf.

Das Seitenführungsprofil 4a, 4b weist an der Montageseite eine Befestigungsnut 27b auf, welche mit dem Verbindungsmittel 22, insbesondere mit der Hammerkopfschraube, zusammenwirkt, um das Seitenführungsprofil 4a, 4b an der Seitenführungshalterung 6 zu befestigen.

In Fig. 6 ist eine Seitenansicht der Fördervorrichtung 1 dargestellt, wobei das Seitenführungsprofil 4b mittels Seitenführungshalterungen 6 am Rahmenprofil 3b befestigt ist. Ein derartiger Aufbau ist gleichermaßen für das erste Seitenführungsprofil 4a am ersten Rahmenprofil 3a sowie für das zweite Seitenführungsprofil 4b am zweiten Rahmenprofil 3b möglich, wie in Fig. 1 ersichtlich. Auch in dieser Darstellung ist die Seitenabdeckung 9 nicht gezeigt.

Der Profilschenkel 26 des Rahmenprofils 3a, 3b umfasst eine Vielzahl von Montageöffnungen 28. Es ist vorgesehen, dass die Förderelemente 5 in derartigen Montageöffnungen 28 gelagert sind, wie dies in Fig. 5 dargestellt ist. Hierfür greift die Rollenachse der Förderelemente 5 in einander gegenüberliegende Montageöffnungen 28 des ersten Rahmenprofils 3a und des zweiten Rahmenprofils 3b ein.

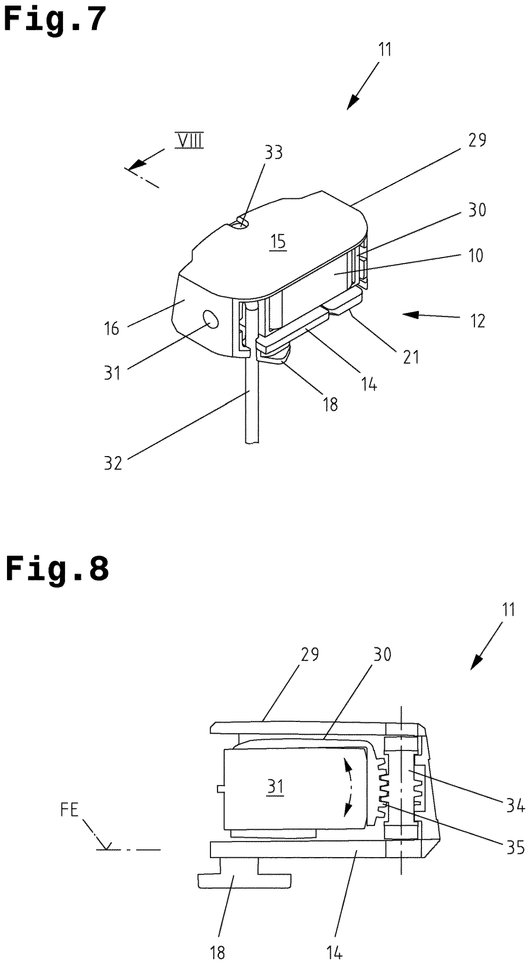

Fig. 7 zeigt die Sensorhalterung 11 in einer perspektivischen Darstellung, wobei die Anbindungsanordnung 12 an einer Unterseite der Sensorhalterung 11 angeordnet ist. Die Sensorhalterung 11 ist somit durch die Anbindungsanordnung 12 am Montageschenkel 7 des Rahmenprofils 3a, 3b fixierbar. Ein Befestigungsvorgang erfolgt wie zuvor beschrieben und in Fig. 3a und Fig. 3b gezeigt.

Hierbei ist vorgesehen, dass der Basiskörper der Anbindungsanordnung 12 ein Außengehäuse 29 der Sensorhalterung 11 bereitstellt. Innerhalb des Außengehäuses 29 ist ein Innengehäuse 30 angeordnet, in welchem der Sensor 10 positioniert ist.

Das Innengehäuse 30 ist nach dieser Ausführung schwenkbar am Außengehäuse 29 gelagert. Hierfür weisen die erste Seitenwandung 16 und die zweite Seitenwandung 16 der Anbindungsanordnung 12 bzw. des Außengehäuses 29 jeweils eine Bolzenaufnahme 31 auf. Die Bolzenaufnahme 31 umfasst ein Durchgangsloch, zur Aufnahme eines Bolzens, und eine Führungskerbe, in welcher der Bolzen zum Durchgangsloch führbar ist.

Hierbei ist vorgesehen, dass an gegenüberliegenden Seitenwänden des Innengehäuses 30 jeweils ein Bolzen angeformt ist, welcher in jeweils eine Bolzenaufnahme 31 eingreift. Die Bolzen sind in einer Linie zueinander ausgerichtet, sodass diese eine Schwenkachse des Innengehäuses 30 definieren, welche parallel zur Bodenwandung 14 ausgerichtet ist.

Darüber hinaus weist das Verbindungselement 18 der Anbindungsanordnung 12 einen Kabelkanal auf, durch welchen ein Sensorkabel 32 aus dem Außengehäuse 29 führbar ist. Der Kabelkanal ist durch das Verbindungselement 18 und durch die Bodenwandung 14 reichend sowie zylinderförmig ausgebildet. Damit das Sensorkabel 32 seitlich in den Kabelkanal gedrückt werden kann, ist der Kabelkanal seitlich geöffnet bzw. im Querschnitt C-förmig ausgebildet. Da der Kabelkanal durch das Verbindungselement 18 reicht, ist es möglich, das Sensorkabel 32 durch die erste Ausnehmung 8 der Ausnehmungen 8 in den Innenraum des Rahmenprofils 3a, 3b zu führen.

Aufgrund geringerer Belastungen auf die Sensorhalterung 11 als auf die Seitenführungshalterung 6 ist es nicht erforderlich, dass der Basiskörper mehrere Stützwände und/oder das Verbindungselement 18 ein Versteifungselement 19 aufweisen.

Um eine Neigung des Innengehäuses 30 und somit des darin aufgenommenen Sensors 10 relativ zur Förderebene FE einzustellen, weist die Sensorhalterung 11 eine Verstellvorrichtung auf, welche über eine Betätigungsöffnung 33 in der Deckenwandung 15 und/oder in der Bodenwandung 14 zugänglich und betätigbar ist.

Fig. 8 zeigt einen Querschnitt entlang der in Fig. 7 dargestellten Linie VIII-VIII durch die Sensorhalterung 11, wobei die Verstellvorrichtung innerhalb des Außengehäuses 29 ersichtlich ist.

Die Verstellvorrichtung umfasst eine Stellschraube 34 und eine mit dieser zusammenwirkende Verzahnung 35, welche am Innengehäuse 30 angeordnet ist. Im gezeigten Beispiel ist die Stellschraube 34 orthogonal zur Bodenwandung 14 ausgerichtet und die Verzahnung 35 um die Schwenkachse des Innengehäuses 30 gekrümmt. Durch ein Betätigen bzw. Drehen der Stellschraube 34 kann das Innengehäuse 30 und somit der Sensor 10 um die Schwenkachse geschwenkt werden, wie durch den Doppelpfeil angedeutet. Die Stellschraube 34 kann durch die Betätigungsöffnung 33 in der Deckenwandung 15 beispielsweise mit einem Schraubenzieher betätigt werden.

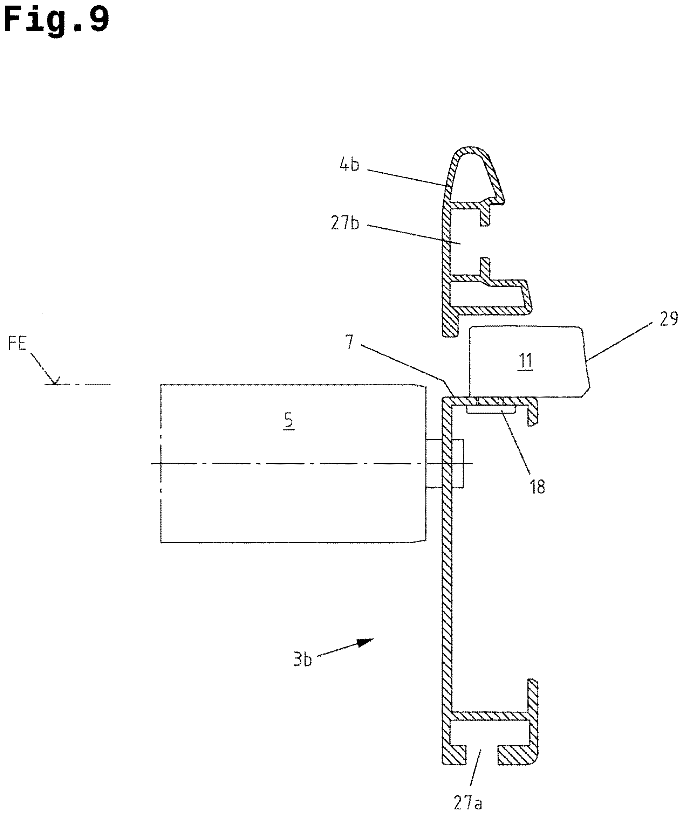

Fig. 9 zeigt einen Querschnitt durch die Fördervorrichtung 1 entlang der Linie IX-IX in Fig. 1. Hierbei ist die Sensorhalterung 11 am Montageschenkel 7 des zweiten Rahmenprofils 3b befestigt, sodass das Außengehäuse 29 im Wesentlichen zwischen dem zweiten Rahmenprofil 3b und dem zweiten Seitenführungsprofil 4b positioniert ist. Selbstverständlich kann die Sensorhalterung 11 in analoger Weise am ersten Rahmenprofil 3a befestigt sein.

Das Seitenführungsprofil 4a, 4b ist hierbei, ebenso wie in Fig. 5, so angeordnet, dass ein Vertikalabstand zwischen dem Montageschenkel 7 und einer Unterkante des Seitenführungsprofils 4a, 4b bzw. einer Tangentialebene durch die Unterkante des Seitenführungsprofils 4a, 4b bereitgestellt ist. Der Vertikalabstand ermöglicht eine optische Verbindung des Sensors 10 zum Förderbereich.

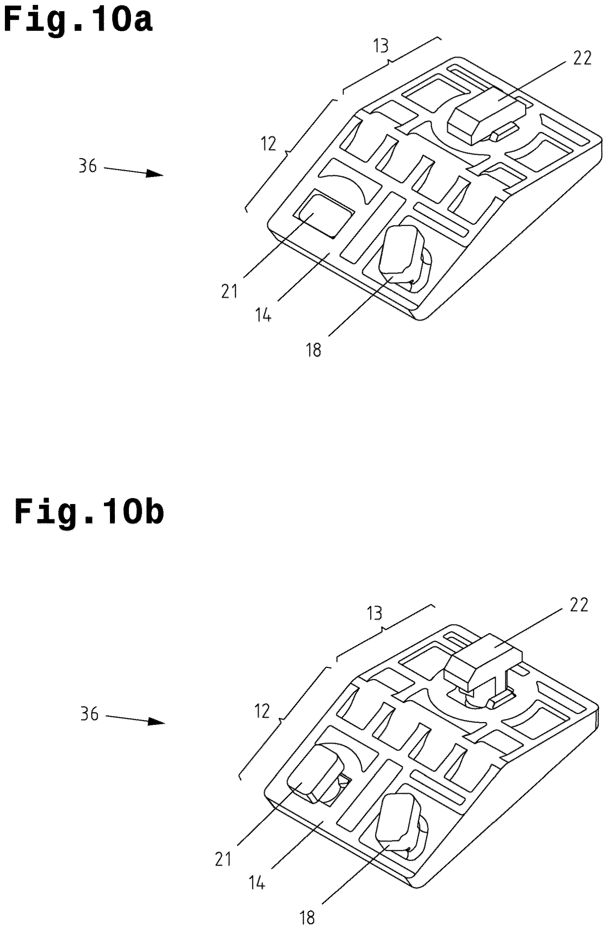

In Fig. 10a ist ein eine perspektivische Darstellung einer Abdeckungshalterung 36 gezeigt, mit welcher eine Abdeckung 37, insbesondere eine Unterseitenabdeckung für die Fördervorrichtung 1, am Rahmenprofil 3a, 3b fixiert werden kann. Die Abdeckungshalterung 36 weist eine weitere Ausführungsform der Anbindungsanordnung 12 auf. Ebenso, wie in den bisher gezeigten Beispielen, umfasst die Montageaufnahme 13 ein Verbindungsmittel 22, welches als Hammerkopfschraube ausgebildet ist.

Der Basiskörper weist eine Bodenwandung 14 auf, an welcher das Verbindungselement 18 angeordnet ist. Das Verbindungselement 18 ist analog zu den bisher gezeigten Ausführungsbeispielen der Anbindungsanordnung 12 ausgebildet. Für die Abdeckungshalterung 36 ist das Versteifungselement 19 nicht zwingend erforderlich.

Die Verriegelungsvorrichtung umfasst in dieser Variante eine Vertiefung in der Bodenwandung 14. Das Verriegelungselement 21 ist orthogonal zur Bodenwandung 14 verschiebbar in der Vertiefung angeordnet, sodass das Verriegelungselement 21 aus der Vertiefung herausbewegbar ist. Überdies ist das Verriegelungselement 21 um eine Verriegelungsachse drehbar gelagert. Die Verriegelungsdrehachse ist orthogonal zur Bodenwandung 14 ausgerichtet. Hierbei ist vorgesehen, dass das Verriegelungselement 21 bündig mit der Bodenwandung 14 abschließt oder von der Bodenwandung 14 rückspringend angeordnet ist, wenn das Verriegelungselement 21 innerhalb der Vertiefung positioniert ist.

Fig. 10b zeigt die Anbindungsanordnung 12 aus Fig. 10a wobei das Verriegelungselement 21 aus der Vertiefung herausbewegt und um 90° gedreht ist. Das Verriegelungselement 21 ist hierbei, wie zuvor für das Verbindungselement 18 beschrieben, mit einem hammerförmigen Kopf ausgebildet.

Die Montageaufnahme 13 und der Basiskörper der in Fig. 10a und Fig. 10b gezeigten Abdeckungshalterung 36 sind starr verbunden bzw. einstückig ausgebildet.

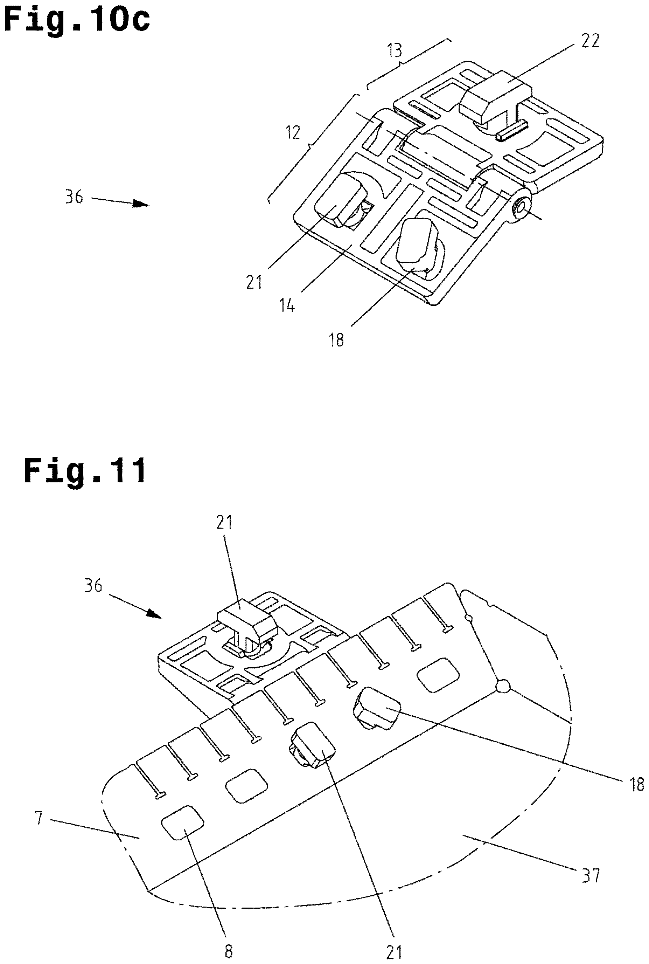

In Fig. 10c ist eine alternative Ausführungsform der Abdeckungshalterung 36 gezeigt, bei welcher die Montageaufnahme 13 und der Basiskörper schwenkbar, insbesondere über ein Scharnier, gelenkig miteinander verbunden sind. Dadurch kann die Abdeckung 37 schwenkbar am Rahmenprofil 3a, 3b befestigt sein.

Eine Befestigung der Anbindungsanordnung 12 bzw. der Abdeckungshalterung 36 an einem Montageschenkel 7 erfolgt im Wesentlichen wie in Fig. 3a und Fig. 3b gezeigt und zuvor beschrieben.

Zur Befestigung wird die Abdeckungshalterung 36 bzw. die Anbindungsanordnung 12 zunächst, wie in Fig. 3a gezeigt, in die Anbindungsposition 24 gebracht, in welcher der Kopf des Verbindungselementes 18 durch die erste Ausnehmung 8 der Ausnehmungen 8 des Montageschenkels 7 geführt wird. Anschließend wird die Anbindungsanordnung 12 um den Drehwinkel α in die Montageposition 25 gedreht.

In der Montageposition 25 der Anbindungsanordnung 12, wie in Fig. 11 ersichtlich, kann nun das Verriegelungselement 21 aus der Vertiefung heraus bewegt und, analog zum Verbindungselement 18, mit der zweiten Ausnehmung 8 der Ausnehmungen 8 in Eingriff gebracht werden. Hierbei wird ein Kopf des Verriegelungselementes 21 durch die zweite Ausnehmung 8 der Ausnehmungen 8 geführt.

Anschließend kann das Verriegelungselement 21, insbesondere um 90°, gedreht werden, sodass der hammerförmige Kopf des Verriegelungselementes 21 in gleicher Weise wie der Kopf der Verbindungselementes 18 den Montageschenkel 7 in einem Randbereich der zweiten Ausnehmung 8 hintergreift. Dies ist in Fig. 11 gezeigt.

Der Montageschenkel 7 ist hierbei an einer Abdeckung 37 angeordnet. Ein erster Randabschnitt der Abdeckung 37 und ein zweiter Randabschnitt der Abdeckung 37 bilden jeweils einen Montageschenkel 7 aus. Die Abdeckung 37 kann beispielsweise als Unterseitenabdeckung einer Fördervorrichtung 1 ausgebildet sein, welche über die Abdeckungshalterung 36 am weiteren Schenkel bzw. an einem Abdeckungsschenkel des Rahmenprofils 3a, 3b befestigt ist.

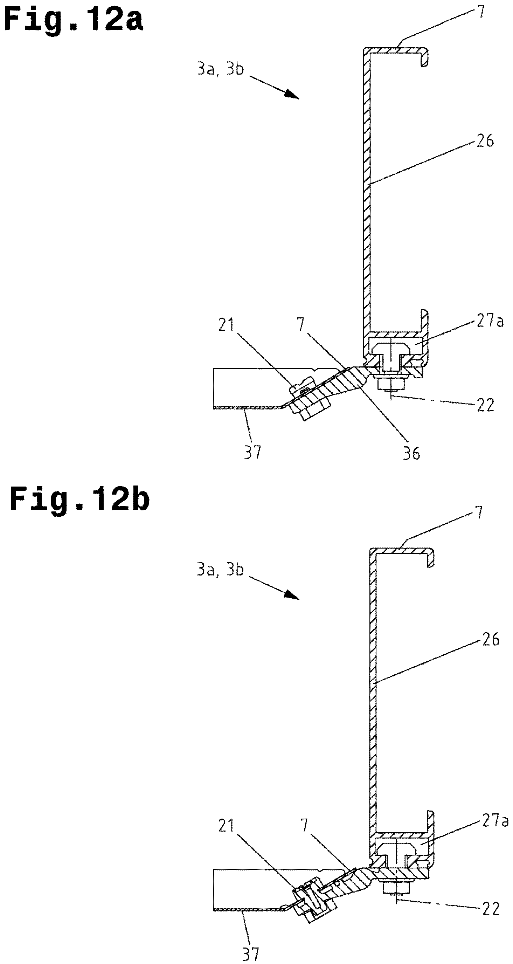

Fig. 12a zeigt einen Querschnitt durch die Abdeckungshalterung 36, mit welcher die Abdeckung 37 am Rahmenprofil 3a, 3b befestigt ist. Die Abdeckung 37 bzw. der Montageschenkel 7 der Abdeckung 37 ist mittels der Anbindungsanordnung 12 an der Abdeckungshalterung 36 befestigt. Das Verbindungsmittel 22 der Abdeckungshalterung 36 ist in die Befestigungsnut 27a am weiteren Schenkel bzw. am Abdeckungsschenkel des Rahmenprofils 3a, 3b eingeführt und wirkt mit dieser zusammen, um die Abdeckungshalterung 36 am Rahmenprofil 3a, 3b zu befestigen.

In Fig. 12b ist ein weiterer Querschnitt durch die Abdeckungshalterung 36 in einer Ebene durch das Verriegelungselement 21 gezeigt, welches drehbar und verschiebbar am Basiskörper der Anbindungsanordnung 12 gelagert ist.

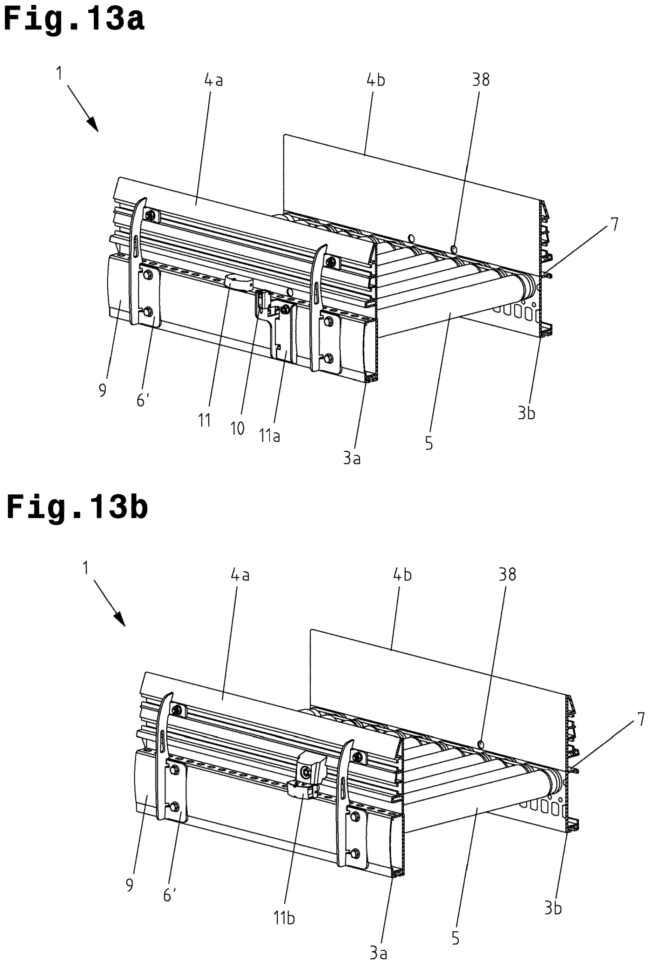

In Fig. 13a ist ein Abschnitt einer alternativen Ausführung der Fördervorrichtung 1 in perspektivischer Darstellung gezeigt. Die Fördervorrichtung 1 ist im Wesentlichen analog zur in Fig. 1 gezeigten Fördervorrichtung 1 aufgebaut.

Im gezeigten Beispiel verlaufen ein erstes Rahmenprofil 3a und ein zweites Rahmenprofil 3b mit gegenseitigem Abstand parallel zueinander in einer Förderrichtung des (nicht eingetragenen) Stückguts 2.

Zwischen dem ersten Rahmenprofil 3a und dem zweiten Rahmenprofil 3b ist eine Vielzahl von Förderelementen 5 angeordnet, welche eine Förderebene FE definieren.

Hierbei sind die Förderelemente 5 als Förderrollen ausgebildet. Alternativ dazu kann beispielsweise vorgesehen sein, dass die Förderelemente 5 als Fördergurte ausgebildet sind oder ein Förderelement 5 vorgesehen ist, welches als Fördergurt ausgebildet ist. Auch kann ein Fördergurt um Förderrollen geführt werden, sodass das Förderelement 5 durch den Fördergurt gebildet ist.

Das Stückgut 2 wird auf der Förderebene FE bzw. in einem Förderbereich transportiert, welcher seitlich durch die Seitenführungsprofile 4a, 4b bzw. durch einander zugewandte Innen- oder Führungsseiten der Seitenführungsprofile 4a, 4b und nach unten durch die Förderebene FE begrenzt ist.

Um den Förderbereich seitlich zu begrenzen, verlaufen ein erstes Seitenführungsprofil 4a und ein zweites Seitenführungsprofil 4b ebenfalls mit gegenseitigem Abstand parallel zueinander und in Förderrichtung des Stückguts 2.

Das erste Seitenführungsprofil 4a ist am ersten Rahmenprofil 3a und das zweite Seitenführungsprofil 4b am zweiten Rahmenprofil 3b montiert. Die Seitenführungsprofile 4a, 4b sind jeweils mittels Seitenführungshalterungen am korrespondierenden Rahmenprofil 3a, 3b befestigt. Bei der dargestellten Ausführungsform sind die Seitenführungsprofile 4a, 4b über zu den oben beschriebenen Seitenführungshalterungen alternative Seitenführungshalterungen 6' montiert, welche seitlich am Rahmenprofil 3a, 3b befestigt sind. Grundsätzlich wäre es aber auch denkbar, Seitenführungshalterungen mit der oben beschriebenen Anbindungsanordnung 12 zu verwenden.

Im dargestellten Beispiel sind Seitenführungsprofile 4a, 4b vorgesehen, welche im Wesentlichen unmittelbar an das jeweilige Rahmenprofil 3a, 3b anschließen. Dadurch ist die Fördervorrichtung 1 für den Transport von Stückgütern 2 geeignet, welche in sogenannten Polybags verpackt sind.

Darüber hinaus weisen die Seitenführungsprofile 4a, 4b jeweils eine Führungsseite und eine Montageseite auf. Bei der gezeigten Fördervorrichtung 1 sind die Seitenführungsprofile 4a, 4b so angeordnet, dass deren Führungsseiten einander bzw. dem Förderbereich zugewandt sind. Die Montageseite des ersten Seitenführungsprofils 4a und die Montageseite des zweiten Seitenführungsprofils 4b sind voneinander bzw. vom Förderbereich abgewandt. Überdies sind die Seitenführungsprofile 4a, 4b jeweils an der Montageseite mit den Seitenführungshalterungen 6' verbunden.

Die Rahmenprofile 3a, 3b weisen im Wesentlichen einen C-förmigen Querschnitt auf, wobei eine Seitenabdeckung 9 zum Verschließen bzw. Abdecken einer offenen Seite des C-förmigen Querschnittes. Somit wird ein durch das Rahmenprofil 3a, 3b und die Seitenabdeckung 9 begrenzter Innenraum des Rahmenprofils 3a, 3b bereitgestellt. In Fig. 13 ist das erste Rahmenprofil 3a mit der Seitenabdeckung 9 und das zweite Rahmenprofil 3b ohne Seitenabdeckung 9 dargestellt.

Zur Aufnahme von Halterungen weisen die Rahmenprofile 3a, 3b jeweils einen Montageschenkel 7 auf, welcher eine Vielzahl von beabstandet zueinander angeordneter Ausnehmungen 8 umfasst, wie oben beschrieben.

Zur Detektion von transportiertem Stückgut 2 weist die Fördervorrichtung 1 eine oder mehrere Lichtschranken, insbesondere Reflexionslichtschranken, auf. Im dargestellten Abschnitt der Fördervorrichtung 1 sind zwei Lichtschranken angeordnet. Selbstverständlich können in nicht gezeigten Abschnitten weitere Lichtschranken und/oder zusätzliche Sensoren 10 angeordnet sein.

Eine derartige Lichtschranke umfasst einen Sensor 10 und einen zum Sensor 10 korrespondierenden Lichtreflektor, welcher in Fig. 13 nicht dargestellt ist. Der Sensor 10 ist jeweils am ersten Rahmenprofil 3a befestigt. Der Lichtreflektor ist dem Sensor 10 gegenüberliegend am zweiten Rahmenprofil 3b oder am zweiten Seitenführungsprofil 4b montiert.

Im dargestellten Beispiel ist ein (nicht ersichtlicher) Sensor 10 einer ersten Lichtschranke mittels einer ersten Sensorhalterung 11 befestigt, die eine zuvor beschriebe Anbindungsanordnung 12 aufweist. Ein dargestellter Sensor 10 einer zweiten Lichtschranke ist mittels einer alternativen Sensorhalterung 11a montiert, welche seitlich am Rahmenprofil 3a, 3b befestigt ist. In der Regel können Sensoren 10 wahlweise mittels der ersten Sensorhalterung 11 oder der alternativen Sensorhalterung 11a montiert sein.

In einer in Fig. 13b dargestellten Variante kann der (nicht ersichtliche) Sensor 10 mittels einer weiteren alternativen Sensorhalterung 11b montiert sein, welche am ersten Seitenführungsprofil 4a befestigt ist. Die weitere alternative Sensorhalterung 11b weist ein Außengehäuse 29 und ein Innengehäuse 30 zur Aufnahme des Sensors 10 auf, wie in Fig. 7 und Fig. 8 gezeigt. Das Innengehäuse 30 ist (wie zuvor zu Fig. 7 und Fig. 8 beschrieben) schwenkbar am Außengehäuse 29 gelagert. Eine Neigung des Innengehäuses 30 bzw. des Sensors 10 kann mittels einer zuvor zu Fig. 7 und Fig. 8 beschriebenen Verstellvorrichtung eingestellt werden. Im Unterschied zur in Fig.8 gezeigten Ausführung weist das in Fig. 13b dargestellte Außengehäuse 29 kein Verbindungselement 18 sowie kein Verriegelungselement 21 auf.

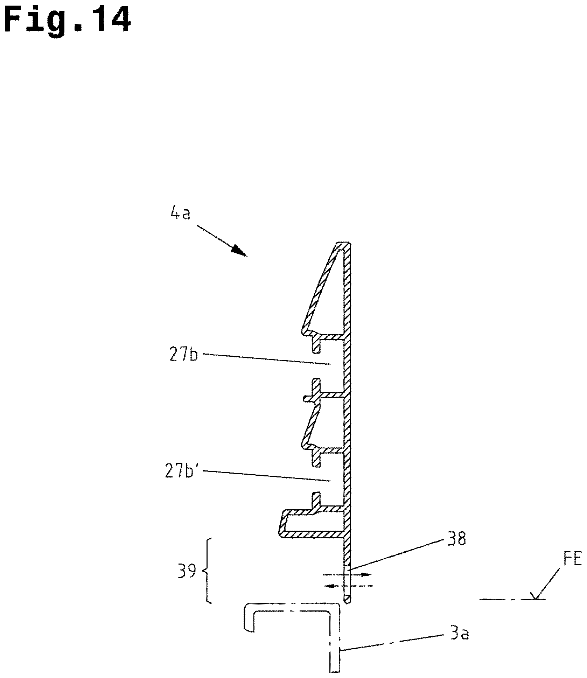

Darüber hinaus umfasst die Sensorhalterung 11b eine alternative Anbindungsanordnung mit einem Befestigungsmittel bzw. Klemmmittel, welches mit der in Fig. 14 eingetragenen oberen Befestigungsnut 27b oder der unteren Befestigungsnut 27b`, wie dies in Fig. 13b gezeigt ist, zusammenwirkt. Die alternative Anbindungsanordnung kann im Wesentlichen analog zum Montageabschnitt 13 der Seitenführungshalterung 6 ausgebildet sein.

Der Sensor 10 umfasst eine Lichtquelle bzw. einen Lichtsender zur Bereitstellung eines abgestrahlten Lichtstrahls (siehe Pfeil in voller Linie in Fig. 14) und einen Lichtempfänger zur Erfassung eines Lichtstrahls. Bei der gezeigten Lichtschranke wird der abgestrahlte Lichtstrahl von der Lichtquelle zum Lichtreflektor geführt, wobei der abgestrahlte Lichtstrahl den Förderbereich durchquert. Ein am Lichtreflektor reflektierter Lichtstrahl (siehe Pfeil in gestrichelter Linie in Fig. 14) wird vom Lichtreflektor zum Lichtempfänger geführt, wobei der reflektierte Lichtstahl den Förderbereich durchquert.

Um ein Durchführen des abgestrahlten Lichtstrahls und/oder des reflektierten Lichtstrahls zu ermöglichen, weisen das erste Seitenführungsprofil 4a eine erste Durchgangsöffnung 38 und das zweite Seitenführungsprofil 4b eine zweite Durchgangsöffnung 38 auf, welche eine sensorseitige Lochblende und eine reflektorseitige Lochblende bereitstellen. Hierbei ist vorgesehen, dass jedem Sensor 10 und/oder jedem Reflektor eine Lochblende der Lochblenden zugeordnet ist.

Darüber hinaus ist der Sensor 10 über eine Verstellvorrichtung relativ zur sensorseitigen Lochblende einstellbar, sodass ein Winkel zwischen einer Mittelachse der Durchgangsöffnung 38 und dem abgestrahlten Lichtstrahl eingestellt werden kann. Ferner ist vorgesehen, dass der Sensor 10 relativ zur Durchgangsöffnung 38 positioniert ist, sodass ein Teil des Lichtstrahls von der Durchgangsöffnung 38 abgeschnitten wird. Hierbei verläuft der Lichtstrahl versetzt zur Mittelachse der Durchgangsöffnung 38. Der Lichtreflektor kann in gleicher Art und Weise einstellbar sein, sodass ein Winkel zwischen einer Mittelachse der zweiten Durchgangsöffnung 38 und dem reflektierten Lichtstrahl eingestellt werden kann.

In Fig. 14 ist ein Querschnitt durch das erste Seitenführungsprofil 4a und schematisch angedeutet das erste Rahmenprofil 3a der alternativen Fördervorrichtung 1 dargestellt, welches eine erste bzw. obere Befestigungsnut 27b und eine zweite bzw. untere Befestigungsnut 27b` aufweist. Das erste Seitenführungsprofil 4a weist somit eine, im Vergleich zum in Fig. 5 und Fig. 9 im Querschnitt gezeigten Seitenführungsprofil, größere Höhe bzw. einen größeren Abstand zwischen einer Unterkante und einer Oberkante des Seitenführungsprofils 4a auf. Dadurch kann ein Spalt bzw. Vertikalabstand zwischen dem Seitenführungsprofil 4a und dem Rahmenprofil 3a, 3b geschlossen bzw. reduziert werden. Das zweite Seitenführungsprofil 4b kann in gleicher Weise ausgebildet und analog am zweiten Rahmenprofil 3b angeordnet sein.

Die Seitenführungsprofile 4a, 4b können so angeordnet sein, dass eine Unterkante des jeweiligen Seitenführungsprofils 4a, 4b unterhalb der Förderebene FE verläuft, wie in Fig. 14 dargestellt. In anderen Worten kann die Förderebene FE, insbesondere geringfügig, oberhalb zu einer Unterkante des Seitenführungsprofils 4a, 4b verlaufen, wie in Fig. 14 eingetragen.

Zur Befestigung dieses Seitenführungsprofils 4a, 4b greift die Seitenführungshalterung 6' in die obere Befestigungsnut 27b ein, wie in Fig. 13 ersichtlich ist. An einem unteren Ende weist das Seitenführungsprofil 4a, 4b eine Schürze 39 auf, um einen Spalt bzw. Vertikalabstand zwischen dem Seitenführungsprofil 4a, 4b und dem Rahmenprofil 3a, 3b, wie dieser in Fig. 1 ersichtlich ist, zu schließen bzw. zu verdecken, wie dies in Fig. 14 dargestellt ist.

Die Durchgangsöffnung 38 ist in der Schürze 39 angeordnet, um den abgestrahlten Lichtstrahl und/oder den reflektierten Lichtstrahl knapp oberhalb der Förderebene FE in den Förderbereich zu führen. Hierbei kann die Durchgangsöffnung 38 bzw. die Lochblende gebohrt oder gestanzt sein.

Abschließend sei noch erwähnt, dass mit der beschriebenen Anbindungsanordnung 12 eine robuste und verriegelbare Verbindungsvorrichtung realisiert werden kann, mit welcher diverse Halterungen für Fördervorrichtungskomponenten, wie Seitenführungsprofile 4a, 4b, Verbindungselemente 18, Sensoren 10, Reflektoren, Abdeckungen 37, insbesondere Unterseitenabdeckungen, und dergleichen, am Rahmenprofil 3a, 3b der Fördervorrichtung 1 befestigt werden können. Solche Halterungen können demnach beispielsweise als Seitenführungshalterungen 6, Sensorhalterungen 11 und Abdeckungshalterungen 36 ausgeführt sein.

Die erfindungsgemäße Verbindungseinrichtung ist somit universell und in einer einfachen Art und Weise einsetzbar und vereinfacht die Montagearbeiten an der Fördervorrichtung 1. Ferner kann mittels der Durchgangsöffnung 38 ein Einsatzgebiet der Fördervorrichtung 1 erweitert werden.

Abschließend wird auch festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

| | | | |
|---|---|---|---|
| 1 | Fördervorrichtung | 20 | Federelement |
| 2 | Stückgut | 21 | Verriegelungselement |
| 3a, 3b | Rahmenprofil | 22 | Verbindungsmittel |
| 4a, 4b | Seitenführungsprofil | 23 | Stützrippen |
| 5 | Förderelement | 24 | Anbindungsposition |
| 6 | Seitenführungshalterung | 25 | Montageposition |
| 7 | Montageschenkel | 26 | Profilschenkel |
| 8 | Ausnehmung | 27 | Befestigungsnut |
| 9 | Seitenabdeckung | 28 | Montageöffnung |
| 10 | Sensor | 29 | Außengehäuse |
| 11 | Sensorhalterung | 30 | Innengehäuse |
| 11a, 11b | alternative Sensorhalterungen | 31 | Bolzenaufnahme |
| | | 32 | Sensorkabel |
| 12 | Anbindungsanordnung | 33 | Betätigungsöffnung |
| 13 | Montageaufnahme | 34 | Stellschraube |
| 14 | Bodenwandung | 35 | Verzahnung |
| 15 | Deckenwandung | 36 | Abdeckungshalterung |
| 16 | Seitenwandung | 37 | Abdeckung |
| 17 | Stützwandung | 38 | Durchgangsöffnung |
| 18 | Verbindungselement | 39 | Schürze |
| 19 | Versteifungselement | α | Drehwinkel |

## Patentansprüche

1. Anbindungsanordnung (12) einer Verbindungsvorrichtung zur Montage von einer Halterung für Komponenten einer Fördervorrichtung (1) zum Transport von Stückgut (2), insbesondere einer Seitenführungshalterung (6), einer Sensorhalterung (11) oder einer Unterseitenabdeckungshalterung,
wobei die Anbindungsanordnung (12) an der Halterung anordenbar und mit einem Montageschenkel (7) verbindbar ist, welcher eine Vielzahl von in Längsrichtung des Montageschenkels (7) beabstandet zueinander angeordneter Ausnehmungen (8) aufweist,
wobei die Anbindungsanordnung (12) einen Basiskörper aufweist, welcher eine Bodenwandung (14), ein Verbindungselement (18) und eine Verriegelungsvorrichtung umfasst, wobei die Bodenwandung (14) eine Montagefläche bereitstellt und das Verbindungselement (18) von der Montagefläche vorragend angeordnet und in einer Anbindungsposition (24) der Anbindungsanordnung (12) mit einer ersten Ausnehmung (8) der Ausnehmungen (8) in Eingriff bringbar ist, wobei das Verbindungselement (18) eine orthogonal auf die Montagefläche ausgerichtete Montagedrehachse ausbildet, um welche die Anbindungsanordnung (12) aus der Anbindungsposition (24) in eine Montageposition (25) drehbar ist, wobei die Verriegelungsvorrichtung beabstandet zum Verbindungselement (18) angeordnet ist, sodass die Verriegelungsvorrichtung in der Montageposition (25) der Anbindungsanordnung (12) mit einer zweiten Ausnehmung (8) der Ausnehmungen (8) des Montageschenkels (7) in Eingriff bringbar ist,
**dadurch gekennzeichnet, dass**
die Verriegelungsvorrichtung ein Verriegelungselement (21) aufweist, welches senkrecht zur Montagefläche, insbesondere aus dem Basiskörper heraus, bewegbar ist, um in die zweite Ausnehmung (8) der Ausnehmungen (8) einzugreifen.

2. Anbindungsanordnung (12) nach Anspruch 1, **dadurch gekennzeichnet, dass** der Basiskörper
- eine Deckenwandung (15),
- eine erste Seitenwandung (16) und
- eine zweite Seitenwandung (16) aufweist,
wobei die erste Seitenwandung (16) und die zweite Seitenwandung (16) einander gegenüberliegend angeordnet sind und sich von der Bodenwandung (14) zumindest zur Deckenwandung (15) erstrecken, und wobei eine Oberseite der Bodenwandung (14) zur Deckenwandung (15) gerichtet ist und eine Unterseite der Bodenwandung (14) die Montagefläche bereitstellt.

3. Anbindungsanordnung (12) nach Anspruch 2, **dadurch gekennzeichnet, dass** der Basiskörper eine Vielzahl von Stützwandungen (17) aufweist, welche zwischen der ersten Seitenwandung (16) und der zweiten Seitenwandung (16) angeordnet sind und sich von der Bodenwandung (14) zur Deckenwandung (15) erstrecken.

4. Anbindungsanordnung (12) nach Anspruch 2 oder 3, **dadurch gekennzeichnet, dass** der Basiskörper eine Rückwandung aufweist, welche sich von der Bodenwandung (14) zumindest zur Deckenwandung (15) und von der ersten Seitenwandung (16) zur zweiten Seitenwandung (16) erstreckt.

5. Anbindungsanordnung (12) nach einem der Ansprüche 1 bis 4, **dadurch gekennzeichnet, dass** das Verbindungselement (18) einen von der Montagefläche vorragenden Zapfen mit einem hammerförmigen Kopf an einem von der Montagefläche vorragenden Ende umfasst, wobei der hammerförmige Kopf in der Anbindungsposition (24) der Anbindungsanordnung (12) durch die erste Ausnehmung (8) des Montageschenkels (7) hindurchführbar ist und in der Montageposition (25) der Anbindungsanordnung (12) einen Randbereich der ersten Ausnehmung (8) des Montageschenkels (7) hintergreift.

6. Anbindungsanordnung (12) nach einem der Ansprüche 1 bis 5, **dadurch gekennzeichnet, dass** das Verbindungselement (18) einen Versteifungseinsatz umfasst.

7. Anbindungsanordnung (12) nach Anspruch 1, **dadurch gekennzeichnet, dass** das Verriegelungselement (21) um eine Verriegelungsdrehachse zwischen einer ersten Position und einer zweiten Position drehbar am Basiskörper gelagert ist und einen hammerförmigen Kopf aufweist, welcher in der ersten Position des Verriegelungselementes (21) durch die zweite Ausnehmung (8) der Ausnehmungen (8) hindurchführbar ist und in der zweiten Position des Verriegelungselementes (21) einen Randbereich der zweiten Ausnehmung (8) der Ausnehmungen (8) hintergreift.

8. Anbindungsanordnung (12) nach einem Anspruch 1 oder 7, **dadurch gekennzeichnet, dass** das Verriegelungselement (21) senkrecht zur Montagefläche und entgegen einer Wirkung einer Federkraft bewegbar ist, wobei das Verriegelungselement (21) in der Montageposition (25) selbsttätig unter Ausnutzung der Federkraft in die zweite Ausnehmung (8) der Ausnehmungen (8) eingreifen kann.

9. Anbindungsanordnung (12) nach Anspruch 8, **dadurch gekennzeichnet, dass** die Bodenwandung (14) zwei von einem ersten Rand der Bodenwandung (14) in Richtung eines dem ersten Rand gegenüberliegenden zweiten Randes der Bodenwandung (14) erstreckende und voneinander beabstandete Schlitze aufweist, sodass die Bodenwandung (14) zwischen den Schlitzen biegbar ist, um ein Federelement (20) bereitzustellen.

10. Verbindungsvorrichtung zur Montage von einer Halterung für Komponenten einer Fördervorrichtung (1) zum Transport von Stückgut (2) umfassend eine Anbindungsanordnung (12) und einen mit dieser zusammenwirkenden Montageschenkel (7), **dadurch gekennzeichnet, dass** die Anbindungsanordnung (12) nach einem der Ansprüche 1 bis 9 ausgebildet ist und der Montageschenkel (7) eine Vielzahl von in Längsrichtung des Montageschenkels (7) voneinander beabstandeten Ausnehmungen (8) aufweist, wobei eine erste Ausnehmung (8) der Ausnehmungen (8) mit dem Verbindungselement (18) der Anbindungsanordnung (12) und eine zweite Ausnehmung (8) der Ausnehmungen (8) mit der Verriegelungsvorrichtung der Anbindungsanordnung (12) zusammenwirken können.

11. Seitenführungshalterung (6) zur Montage eines Seitenführungsprofils (4a, 4b) an einem Rahmenprofil (3a, 3b) einer Fördervorrichtung (1) zum Transport von Stückgut (2), umfassend eine Anbindungsanordnung (12) und eine Montageaufnahme (13), welche Montageaufnahme (13) das Seitenführungsprofil (4a, 4b) formschlüssig aufnimmt und an welcher das Seitenführungsprofil (4a, 4b) über ein Verbindungsmittel (22) befestigbar ist, **dadurch gekennzeichnet, dass** die Anbindungsanordnung (12) nach einem der Ansprüche 1 bis 9 ausgebildet ist.

12. Seitenführungshalterung (6) nach Anspruch 11, **dadurch gekennzeichnet, dass** die Montageaufnahme (13) einstückig mit dem Basiskörper der Anbindungsanordnung (12) ausgebildet ist.

13. Seitenführungshalterung (6) nach Anspruch 11 oder 12, **dadurch gekennzeichnet, dass** die Montageaufnahme (13) eine Öffnung zur Aufnahme des Verbindungsmittels (22) aufweist.

14. Sensorhalterung (11) zur Montage eines Sensors (10) an einem Rahmenprofil (3a, 3b) einer Fördervorrichtung (1) zum Transport von Stückgut (2), umfassend ein Au-βengehäuse (29) und ein im Außengehäuse (29) angeordnetes Innengehäuse (30) zur Aufnahme des Sensors (10), **dadurch gekennzeichnet, dass** die Sensorhalterung (11) eine Anbindungsanordnung (12) nach einem der Ansprüche 1 bis 9 aufweist.

15. Sensorhalterung (11) nach Anspruch 14, **dadurch gekennzeichnet, dass** der Basiskörper der Anbindungsanordnung (12) das Außengehäuse (29) bildet und das Innengehäuse (30) schwenkbar am Außengehäuse (29) gelagert ist, wobei eine Neigung des Innengehäuses (30) mittels einer Verstellvorrichtung einstellbar ist.

16. Sensorhalterung (11) nach Anspruch 14 oder 15, **dadurch gekennzeichnet, dass** das Verbindungselement (18) der Anbindungsanordnung (12) einen Kabelkanal aufweist, sodass ein Kabel des Sensors (10) durch den Kabelkanal aus dem Außengehäuse (29) führbar ist.

17. Abdeckungshalterung (36) zur Montage einer Abdeckung (37) an einem Rahmenprofil (3a, 3b) einer Fördervorrichtung (1) zum Transport von Stückgut (2), umfassend eine Anbindungsanordnung (12) und eine Montageaufnahme (13) an welcher das Rahmenprofil (3a, 3b) über ein Verbindungsmittel (22) befestigbar ist, **dadurch gekennzeichnet, dass** die Anbindungsanordnung (12) nach einem der Ansprüche 1 bis 9 ausgebildet ist.

18. Abdeckungshalterung (36) nach Anspruch 17, **dadurch gekennzeichnet, dass** die Montageaufnahme (13) einstückig mit dem Basiskörper der Anbindungsanordnung (12) ausgebildet ist.

19. Abdeckungshalterung (36) nach Anspruch 17, **dadurch gekennzeichnet, dass** die Montageaufnahme (13) über eine Scharnierverbindung mit dem Basiskörper der Anbindungsanordnung (12) verbunden ist, sodass die Montageaufnahme (13) und der Basiskörper der Anbindungsanordnung (12) relativ zueinander schwenkbar sind.

20. Abdeckungshalterung (36) nach einem der Ansprüche 17 bis 19, **dadurch gekennzeichnet, dass** die Montageaufnahme (13) eine Öffnung zur Aufnahme des Verbindungsmittels (22) aufweist.

21. Fördervorrichtung (1) zum Transport von Stückgut (2), umfassend eine Vielzahl von Rahmenprofilen (3a, 3b), zumindest ein Förderelement (5) und eine Vielzahl von Seitenführungsprofilen (4a, 4b), wobei ein erstes Rahmenprofil (3a) der Rahmenprofile (3a, 3b) und ein zweites Rahmenprofil (3b) der Rahmenprofile (3a, 3b) mit gegenseitigem Abstand parallel zueinander und in Förderrichtung des Stückguts (2) verlaufen und wobei das Förderelement (5) zwischen dem ersten Rahmenprofil (3a) und dem zweiten Rahmenprofil (3b) angeordnet ist und eine Förderebene (FE) definiert, auf welcher das Stückgut (2) transportiert werden kann und wobei ein erstes Seitenführungsprofil (4a) der Seitenführungsprofile (4a, 4b) und ein zweites Seitenführungsprofil (4b) der Seitenführungsprofile (4a, 4b) mit gegenseitigem Abstand parallel zueinander und in Förderrichtung des Stückguts (2) verlaufen, wobei das erste Seitenführungsprofil (4a) am ersten Rahmenprofil (3a) und das zweite Seitenführungsprofil (4b) am zweiten Rahmenprofil (3b) jeweils über eine Vielzahl von Seitenführungshalterungen (6) montiert sind, **dadurch gekennzeichnet, dass** zumindest eine Seitenführungshalterung (6) der Seitenführungshalterungen (6) eine Anbindungsanordnung (12) nach einem der Ansprüche 1 bis 9 aufweist und mit einem korrespondierenden Rahmenprofil (3a, 3b) der Rahmenprofile (3a, 3b) über eine Verbindungsvorrichtung nach Anspruch 10 befestigt ist.

22. Fördervorrichtung (1) nach Anspruch 21, **dadurch gekennzeichnet, dass** die zumindest eine Seitenführungshalterung (6) der Seitenführungshalterungen (6) nach einem der Ansprüche 11 bis 13 ausgebildet ist.

23. Fördervorrichtung (1) nach Anspruch 21 oder 22, **dadurch gekennzeichnet, dass** zumindest ein Sensor (10) mittels einer Sensorhalterung (11) nach einem der Ansprüche 14 bis 16 an einem Rahmenprofil (3a, 3b) der Rahmenprofile (3a, 3b) befestigt ist.

24. Fördervorrichtung (1) zum Transport von Stückgut (2), umfassend eine Vielzahl von Rahmenprofilen (3a, 3b), eine Abdeckung (37) an einer Unterseite der Fördervorrichtung (1) und zumindest ein Förderelement (5), wobei ein erstes Rahmenprofil (3a) der Rahmenprofile (3a, 3b) und ein zweites Rahmenprofil (3b) der Rahmenprofile (3a, 3b) mit gegenseitigem Abstand parallel zueinander und in Förderrichtung des Stückguts (2) verlaufen und wobei das Förderelement (5) zwischen dem ersten Rahmenprofil (3a) und dem zweiten Rahmenprofil (3b) angeordnet ist und eine Förderebene (FE) definiert, auf welcher das Stückgut (2) transportiert werden kann und wobei die Abdeckung (37) unterhalb des zumindest einen Förderelementes (5) zwischen dem ersten Rahmenprofil (3a) und dem zweiten Rahmenprofil (3b) angeordnet und in Förderrichtung des Stückguts (2) verläuft und entlang eines ersten Randabschnitts der Abdeckung (37) über eine Vielzahl von Abdeckungshalterungen (36) am ersten Rahmenprofil (3a) und entlang eines zweiten Randabschnitts der Abdeckung (37) über eine Vielzahl von Abdeckungshalterungen (36) am zweiten Rahmenprofil (3b) befestigt ist, **dadurch gekennzeichnet, dass** zumindest eine Abdeckungshalterung (36) der Abdeckungshalterungen (36) eine Anbindungsanordnung (12) nach einem der Ansprüche 1 bis 9 aufweist und über eine Verbindungsvorrichtung nach Anspruch 10 mit der Abdeckung (37) verbindbar ist, wobei der erste Randabschnitt der Abdeckung (37) und der zweite Randabschnitt der Abdeckung (37) jeweils einen Montageschenkel (7) ausbilden.

25. Fördervorrichtung (1) nach Anspruch 24, **dadurch gekennzeichnet, dass** die zumindest eine Abdeckungshalterung (36) nach einem der Ansprüche 17 bis 20 ausgebildet ist.

## Claims

1. A linking arrangement (12) of a connecting device for mounting a holder for components of a conveying device (1) for transporting unit loads (2), in particular of a lateral guide holder (6), a sensor holder (11), or a bottom cover holder,
wherein the linking arrangement (12) is arrangeable on the holder and is connectable to a mounting limb (7), which has a plurality of holes (8) arranged at a distance from one another in a longitudinal direction of the mounting limb (7),
wherein the linking arrangement (12) has a base body, which comprises a base wall (14), a connecting element (18), and a locking device, wherein the base wall (14) provides a mounting surface, and the connecting element (18) is arranged so as to protrude from the mounting surface and can be brought into engagement with a first hole (8) of the holes (8) when the linking arrangement (12) is in a linking position (24), wherein the connecting element (18) forms a mounting axis of rotation oriented orthogonally to the mounting surface, about which mounting axis the linking arrangement (12) can be rotated from the linking position (24) into a mounting position (25), wherein the locking device is arranged at a distance from the connecting element (18), so that the locking device can be brought into engagement with a second hole (8) of the holes (8) of the mounting limb (7) when the linking arrangement (12) is in the mounting position (25),
**characterized in that**
the locking device has a locking element (21), which is movable perpendicularly to the mounting surface, in particular away from the base body, in order to engage with the second hole (8) of the holes (8).

2. The linking arrangement (12) according to claim 1, **characterized in that** the base body has
- a top wall (15),
- a first side wall (16), and
- a second side wall (16),
wherein the first side wall (16) and the second side wall (16) are arranged so as to be located opposite one another and extend from the base wall (14) at least to the top wall (15), and wherein an upper side of the base wall (14) is directed towards the top wall (15), and a bottom side of the base wall (14) provides the mounting surface.

3. The linking arrangement (12) according to claim 2, **characterized in that** the base body has a plurality of support walls (17), which are arranged between the first side wall (16) and the second side wall (16) and extend from the base wall (14) to the top wall (15).

4. The linking arrangement (12) according to claim 2 or 3, **characterized in that** the base body has a rear wall, which extends from the base wall (14) at least to the top wall (15) and from the first side wall (16) to the second side wall (16).

5. The linking arrangement (12) according to one of claims 1 to 4, **characterized in that** the connecting element (18) comprises a plug having a hammer-shaped head and protruding from the mounting surface at an end protruding from the mounting surface, wherein the hammer-shaped head, in the linking position (24) of the linking arrangement (12), can be passed through the first hole (8) of the mounting limb (7) and, in the mounting position (25) of the linking arrangement (12), engages behind an edge region of the first hole (8) of the mounting limb (7).

6. The linking arrangement (12) according to one of claims 1 to 5, **characterized in that** the connecting element (18) comprises a stiffening insert.

7. The linking arrangement (12) according to claim 1, **characterized in that** the locking element (21) is mounted on the base body so as to be rotatable, about a locking axis of rotation, between a first position and a second position and has a hammer-shaped head, which, in the first position of the locking element (21), can be passed through the second hole (8) of the holes (8) and, in the second position of the locking element (21), engages behind an edge region of the second hole (8) of the holes (8).

8. The linking arrangement (12) according to a claim 1 or 7, **characterized in that** the locking element (21) is movable perpendicularly to the mounting surface and against an action of a spring force, wherein, in the mounting position (25), the locking element (21) can automatically engage with the second hole (8) of the holes (8) utilizing the spring force.

9. The linking arrangement (12) according to claim 8, **characterized in that** the base wall (14) has two slots extending from a first edge of the base wall (14) towards a second edge of the base wall (14) opposite the first edge and being spaced apart from one another, so that the base wall (14) can be bent between the slots in order to provide a spring element (20).

10. A connecting device for mounting a holder for components of a conveying device (1) for transporting unit loads (2), comprising a linking arrangement (12) and a mounting limb (7) interacting therewith, **characterized in that** the linking arrangement (12) is formed according to one of claims 1 to 9 and the mounting limb (7) has a plurality of holes (8) arranged at a distance from one another in a longitudinal direction of the mounting limb (7), wherein a first hole (8) of the holes (8) can interact with the connecting element (18) of the linking arrangement (12) and a second hole (8) of the holes (8) can interact with the locking device of the linking arrangement (12).

11. A lateral guide holder (6) for mounting a lateral guide profile (4a, 4b) on a frame profile (3a, 3b) of a conveying device (1) for transporting unit loads (2), comprising a linking arrangement (12) and a mounting support (13), which mounting support (13) receives the lateral guide profile (4a, 4b) in a positive-locking manner and to which the lateral guide profile (4a, 4b) can be fastened by means of a connecting means (22), **characterized in that** the linking arrangement (12) is formed according to one of claims 1 to 9.

12. The lateral guide holder (6) according to claim 11, **characterized in that** the mounting support (13) is formed in one piece with the base body of the linking arrangement (12).

13. The lateral guide holder (6) according to claim 11 or 12, **characterized in that** the mounting support (13) has an opening for receiving the connecting means (22).

14. A sensor holder (11) for mounting a sensor (10) on a frame profile (3a, 3b) of a conveying device (1) for transporting unit loads (2), comprising an outer housing (29) and an inner housing (30) for receiving the sensor (10) arranged in the outer housing (29), **characterized in that** the sensor holder (11) has a linking arrangement (12) according to one of claims 1 to 9.

15. The sensor holder (11) according to claim 14, **characterized in that** the base body of the linking arrangement (12) forms the outer housing (29) and the inner housing (30) is pivotably mounted on the outer housing (29), wherein an inclination of the inner housing (30) is adjustable by means of an adjusting device.

16. The sensor holder (11) according to claim 14 or 15, **characterized in that** the connecting element (18) of the linking arrangement (12) has a cable channel, so that a cable of the sensor (10) can be passed through the cable channel out of the outer housing (29).

17. A cover holder (36) for mounting a cover (37) on a frame profile (3a, 3b) of a conveying device (1) for transporting unit loads (2), comprising a linking arrangement (12) and a mounting support (13), to which the frame profile (3a, 3b) can be fastened by means of a connecting means (22), **characterized in that** the linking arrangement (12) is formed according to one of claims 1 to 9.

18. The cover holder (36) according to claim 17, **characterized in that** the mounting support (13) is formed in one piece with the base body of the linking arrangement (12).

19. The cover holder (36) according to claim 17, **characterized in that** the mounting support (13) is connected to the base body of the linking arrangement (12) by means of a hinge connection, so that the mounting support (13) and the base body of the linking arrangement (12) can be pivoted relative to one another.

20. The cover holder (36) according to one of claims 17 to 19, **characterized in that** the mounting support (13) has an opening for receiving the connecting means (22).

21. A conveying device (1) for transporting unit loads (2), comprising a plurality of frame profiles (3a, 3b), at least one conveying element (5) and a plurality of lateral guide profiles (4a, 4b), wherein a first frame profile (3a) of the frame profiles (3a, 3b) and a second frame profile (3b) of the frame profiles (3a, 3b) extend at a mutual distance in parallel with one another and in the conveying direction of the unit load (2), and wherein the conveying element (5) is arranged between the first frame profile (3a) and the second frame profile (3b) and defines a conveying plane (FE), on which the unit load (2) can be transported, and wherein a first lateral guide profile (4a) of the lateral guide profiles (4a, 4b) and a second lateral guide profile (4b) of the lateral guide profiles (4a, 4b) extend at a mutual distance in parallel with one another and in the conveying direction of the unit load (2), wherein the first lateral guide profile (4a) is mounted on the first frame profile (3a) and the second lateral guide profile (4b) is mounted on the second frame profile (3b), each by means of a plurality of lateral guide holders (6), **characterized in that** at least one lateral guide holder (6) of the lateral guide holders (6) has a linking arrangement (12) according to one of claims 1 to 9 and is fastened with a corresponding frame profile (3a, 3b) of the frame profiles (3a, 3b) by means of a connecting device according to claim 10.

22. The conveying device (1) according to claim 21, **characterized in that** the at least one lateral guide holder (6) of the lateral guide holders (6) is formed according to one of claims 11 to 13.

23. The conveying device (1) according to claim 21 or 22, **characterized in that** at least one sensor (10) is fastened to a frame profile (3a, 3b) of the frame profiles (3a, 3b) by means of a sensor holder (11) according to one of claims 14 to 16.

24. A conveying device (1) for transporting unit loads (2), comprising a plurality of frame profiles (3a, 3b), a cover (37) on a bottom side of the conveying device (1) and at least one conveying element (5), wherein a first frame profile (3a) of the frame profiles (3a, 3b) and a second frame profile (3b) of the frame profiles (3a, 3b) extend at a mutual distance in parallel with one another in the conveying direction of the unit load (2), and wherein the conveying element (5) is arranged between the first frame profile (3a) and the second frame profile (3b) and defines a conveying plane (FE), on which the unit load (2) can be transported, and wherein the cover (37) is arranged below the at least one conveying element (5) between the first frame profile (3a) and the second frame profile (3b) and extends in the conveying direction of the unit load (2) and is fastened to the first frame profile (3a) along a first edge section of the cover (37) by means of a plurality of cover holders (36) and to the second frame profile (3b) along a second edge section of the cover (37) by means of a plurality of cover holders (36), **characterized in that** at least one cover holder (36) of the cover holders (36) has a linking arrangement (12) according to one of claims 1 to 9 and is connectable to the cover (37) by means of a connecting device according to claim 10, wherein the first edge section of the cover (37) and the second edge section of the cover (37) each form a mounting limb (7).

25. The conveying device (1) according to claim 24, **characterized in that** the at least one cover holder (36) is formed according to one of claims 17 to 20.

## Revendications

1. Dispositif de liaison (12) d'un dispositif de raccordement pour le montage d'un support de composants d'un dispositif de transport (1) pour le transport de charges unitaires (2), plus particulièrement d'un support de guidage latéral (6), d'un support de capteur (11) ou d'un support de recouvrement inférieur,
dans lequel le dispositif de liaison (12) peut être disposé et sur le support et peut être relié avec une branche de montage (7) qui comprend une pluralité d'évidements (8) disposés de manière distante entre eux dans la direction longitudinale de la branche de montage (7),
dans lequel le dispositif de liaison (12) comprend un corps de base qui comprend une paroi de fond (14), un élément de raccordement (18) et un dispositif de verrouillage, dans lequel la paroi de fond (14) met à disposition une surface de montage et l'élément de raccordement (18) est disposé en saillie sur la surface de montage, et, dans une position de liaison (24), le dispositif de liaison (12) peut être emboîté avec un premier évidement (8) des évidements (8), dans lequel l'élément de raccordement (18) forme un axe de rotation de montage, orienté de manière orthogonale par rapport à la surface de montage, autour duquel le dispositif de liaison (12) peut être mis en rotation de la position de liaison (24) vers une position de montage (25), dans lequel le dispositif de verrouillage est disposé de manière distante par rapport à l'élément de raccordement (18), de sorte que le dispositif de verrouillage peut être emboîté, dans la position de montage (25) du dispositif de liaison (12), avec un deuxième évidement (8) des évidements (8) de la branche de montage (7),
**caractérisé en ce que**
le dispositif de verrouillage comprend un élément de verrouillage (21) qui peut être déplacé perpendiculairement par rapport à la surface de montage, plus particulièrement hors du corps de base, afin de s'emboîter dans le deuxième évidement (8) des évidements (8).

2. Dispositif de liaison (12) selon la revendication 1, **caractérisé en ce que** le corps de base comprend
- une paroi de plafond (15),
- une première paroi latérale (16) et
- une deuxième paroi latérale (16),
dans lequel la première paroi latérale (16) et la deuxième paroi latérale (16) sont disposées en face l'une de l'autre et s'étendent e la paroi du fond (14) au moins jusqu'à la paroi de plafond (15) et dans lequel un côté supérieur de la paroi de fond (14) est orienté vers la paroi de plafond (15) et un côté inférieur de la paroi de fond (14) met à disposition la surface de montage.

3. Dispositif de liaison (12) selon la revendication 2, **caractérisé en ce que** le corps de base comprend une pluralité de parois de soutien (17) qui sont disposées entre la première paroi latérale (16) et la deuxième paroi latérale (16) et qui s'étendent de la paroi de fond (14) vers la paroi de plafond (15).

4. Dispositif de liaison (12) selon la revendication 2 ou 3, **caractérisé en ce que** le corps de base comprend une paroi arrière qui s'étend de la paroi de fond (14) au moins jusqu'à la paroi de plafond (15) et de la première paroi latérale (16) à la deuxième paroi latérale (16).

5. Dispositif de liaison (12) selon l'une des revendications 1 à 4, **caractérisé en ce que** l'élément de raccordement (18) comprend un tenon dépassant de la surface de montage, avec une tête en forme de marteau, à une extrémité dépassant de la surface de montage, dans lequel la tête en forme de marteau peut être guidée, dans la position de liaison (24) du dispositif de liaison (12), à travers le premier évidement (8) de la branche de montage (7), et s'accroche, dans la position de montage (25) du dispositif de liaison (12), à l'arrière d'une zone de bord du premier évidement (8) de la branche de montage (7).

6. Dispositif de liaison (12) selon l'une des revendications 1 à 5, **caractérisé en ce que** l'élément de raccordement (18) comprend un insert de rigidification.

7. Dispositif de liaison (12) selon la revendication 1, **caractérisé en ce que** l'élément de verrouillage (21) est logé sur le corps de base de manière rotative autour d'un axe de rotation de verrouillage, entre une première position et une deuxième position et comprend une tête en forme de marteau qui, dans la première position de l'élément de verrouillage (21), peut être guidée à travers le deuxième évidement (8) des évidements (8) et qui s'accroche, dans la deuxième position de l'élément de verrouillage (21), à l'arrière d'une zone de bord du deuxième évidement (8) des évidements (8).

8. Dispositif de liaison (12) selon la revendication 1 ou 7, **caractérisé en ce que** l'élément de verrouillage (21) peut être déplacé perpendiculairement à la surface de montage et à l'encontre de l'action d'une force de ressort, dans lequel l'élément de verrouillage (21) peut s'emboîter, dans la position de montage (25), automatiquement, en utilisant la force de ressort, dans le deuxième évidement (8) des évidements (8).

9. Dispositif de liaison (12) selon la revendication 8, **caractérisé en ce que** la paroi de fond (14) comprend deux fentes s'étendant à partir d'un premier bord de la paroi de fond (14) en direction d'un deuxième bord opposé au premier bord de la paroi de fond (14) et distantes entre elles, de sorte que la paroi de fond (14) peut être pliée entre les fentes, afin de mettre à disposition un élément de ressort (20).

10. Dispositif de raccordement pour le montage d'un support pour des composants d'un dispositif de transport (1) pour le transport de charges unitaires (2) comprenant un dispositif de liaison (12) et une branche de montage (7) en interaction avec celui-ci, **caractérisé en ce que** le dispositif de liaison (12) est conçu selon l'une des revendications 1 à 9 et la branche de montage (7) comprend une pluralité d'évidements (8) distants entre eux dans la direction longitudinale de la branche de montage (7), dans lequel un premier évidement (8) des évidements (8) peut interagir avec l'élément de raccordement (18) du dispositif de liaison (12) et un deuxième évidement (8) des évidements (8) peut interagir avec le dispositif de verrouillage du dispositif de liaison (12).

11. Support de guidage latéral (6) pour le montage d'un profilé de guidage latéral (4a, 4b) sur un profilé de cadre (3a, 3b) d'un dispositif de transport (1) pour le transport de charges unitaires (2), comprenant un dispositif de liaison (12) et un logement de montage (13), ce logement de montage (13) logeant le profilé de guidage latéral (4a, 4b) par complémentarité de forme et sur lequel le profilé de guidage latéral (4a, 4b) est fixé par l'intermédiaire d'un moyen de raccordement (22), **caractérisé en ce que** le dispositif de liaison (12) est conçu selon l'une des revendications 1 à 9.

12. Support de guidage latéral (6) selon la revendication 11, **caractérisé en ce que** le logement de montage (13) est réalisé d'une seule pièce avec le corps de base du dispositif de liaison (12).

13. Support de guidage latéral (6) selon la revendication 11 ou 12, **caractérisé en ce que** le logement de montage (13) comprend une ouverture pour le logement du moyen de raccordement (22).

14. Support de capteur (11) pour le montage d'un capteur (10) sur un profilé de cadre (3a, 3b) d'un dispositif de transport (1) pour le transport de charges unitaires (2), comprenant un boîtier externe (29) et un boîtier interne (30) disposé dans le boîtier externe (29), pour le logement du capteur (10), **caractérisé en ce que** le support de capteur (11) comprend un dispositif de liaison (12) selon l'une des revendications 1 à 9.

15. Support de capteur (11) selon la revendication 14, **caractérisé en ce que** le corps de base du dispositif de liaison (12) constitue le boîtier externe (29) et le boîtier interne (30) est logé de manière pivotante sur le boîtier externe (29), dans lequel une inclinaison du boîtier interne (30) peut être réglé au moyen d'un dispositif de réglage.

16. Support de capteur (11) selon la revendication 14 ou 15, **caractérisé en ce que** l'élément de raccordement (18) du dispositif de liaison (12) comprend un canal de câble de sorte qu'un câble du capteur (10) peut être guidé à travers le canal de câble à partir du boîtier externe (29).

17. Support de recouvrement (36) pour le montage d'un recouvrement (37) sur un profilé de cadre (3a, 3b) d'un dispositif de transport (1) pour le transport de charges unitaires (2), comprenant un dispositif de liaison (12) et un logement de montage (13) sur lequel le profilé de cadre (3a, 3b) peut être fixé par l'intermédiaire d'un moyen de raccordement (22), **caractérisé en ce que** le dispositif de liaison (12) est conçu selon l'une des revendications 1 à 9.

18. Support de recouvrement (36) selon la revendication 17, **caractérisé en ce que** le logement de montage (13) est réalisé d'une seule pièce avec le corps de base du dispositif de liaison (12).

19. Support de recouvrement (36) selon la revendication 17, **caractérisé en ce que** le logement de montage (13) est relié, par l'intermédiaire d'une charnière, avec le corps de base du dispositif de liaison (12), de sorte que le logement de montage (13) et le corps de base du dispositif de liaison (12) peuvent être pivotés l'un par rapport à l'autre.

20. Support de recouvrement (36) selon l'une des revendications 17 à 19, **caractérisé en ce que** le logement de montage (13) comprend une ouverture pour le logement du moyen de raccordement (22).

21. Dispositif de transport (1) pour le transport de charges unitaires (2), comprenant une pluralité de profilés de cadres (3a, 3b), au moins un élément de transport (5) et une pluralité de profilés de guidages latéraux (4a, 4b), dans lequel un premier profilé de cadre (3a) des profilés de cadres (3a, 3b) et un deuxième profilé de cadre (3b) des profilés de cadres (3a, 3b) s'étendent avec une distance parallèlement entre eux et dans la direction de transport de la charge unitaire (2) et dans lequel l'élément de transport (5) est disposé entre le premier profilé de cadre (3a) et le deuxième profilé de cadre (3b) et définit un plan de transport (FE) sur lequel la charge unitaire (2) peut être transportée et dans lequel un premier profilé de guidage latéral (4a) des profilés de guidages latéraux (4a, 4b) et un deuxième profilé de guidage latéral (4b) des profilés de guidages latéraux (4a, 4b) s'étendent avec une distance parallèlement entre eux et dans la direction de transport de la charge unitaire (2), dans lequel le premier profilé de guidage latéral (4a) est monté sur le premier profilé de cadre (3a) et le deuxième profilé de guidage latéral (4b) est monté sur le deuxième profilé de cadre (3b) respectivement par l'intermédiaire d'une pluralité de supports de guidages latéraux (6), **caractérisé en ce qu'**au moins un support de guidage latéral (6) des supports de guidages latéraux (6) comprend un dispositif de liaison (12) selon l'une des revendications 1 à 9 et est fixé avec des profilés de cadres (3a, 3b) correspondants des profilés de cadres (3a, 3b) par l'intermédiaire d'un dispositif de raccordement selon la revendication 10.

22. Dispositif de transport (1) selon la revendication 21, **caractérisé en ce que** l'au moins un support de guidage latéral (6) des supports de guidages latéraux (6) est conçu selon l'une des revendications 11 à 13.

23. Dispositif de transport (1) selon la revendication 21 ou 22, **caractérisé en ce qu'**au moins un capteur (10) est fixé, au moyen d'un support de capteur (11) selon l'une des revendications 14 à 16, à un profilé de cadre (3a, 3b) des profilés de cadres (3a, 3b).

24. Dispositif de transport (1) pour le transport de charges unitaires (2), comprenant une pluralité de profilés de cadres (3a, 3b), un recouvrement (37) sur un côté inférieur du dispositif de transport (1) et au moins un élément de transport (5), dans lequel un premier profilé de cadre (3a) des profilés de cadres (3a, 3b) et un deuxième profilé de cadre (3b) des profilés de cadres (3a, 3b) s'étendent avec une distance parallèlement entre eux et dans la direction de transport de la charge unitaire (2) et dans lequel l'élément de transport (5) est disposé entre le premier profilé de cadre (3a) et le deuxième profilé de cadre (3b) et définit un plan de transport (FE) sur lequel la charge unitaire (2) peut être transportée et dans lequel le recouvrement (37) est disposé en dessous de l'au moins un élément de transport (5), entre le premier profilé de cadre (3a) et le deuxième profilé de cadre (3b) et s'étend dans la direction de transport de la charge unitaire (2) et est fixé le long d'une première portion de bord du recouvrement (37) par l'intermédiaire d'une pluralité de supports de recouvrement (36) au premier profilé de cadre (3a) et le long d'une deuxième portion de bord du recouvrement (37) par l'intermédiaire d'une pluralité de supports de recouvrement (36) au deuxième profilé de cadre (3b), **caractérisé en ce qu'**au moins un support de recouvrement (36) des supports de recouvrement (36) comprend un dispositif de liaison (12) selon l'une des revendications 1 à 9 et peut être relié, par l'intermédiaire d'un dispositif de raccordement selon la revendication 10, avec le recouvrement (37), dans lequel la première portion de bord du recouvrement (37) et la deuxième portion de bord du recouvrement (37) forment respectivement une branche de montage (7).

25. Dispositif de transport (1) selon la revendication 24, **caractérisé en ce que** l'au moins un support de recouvrement (36) est conçu selon l'une des revendications 17 à 20.
